(19) Europäisches Patentamt / European Patent Office / Office européen des brevets

(11) **EP 4 568 171 B1**

(12) **EUROPÄISCHE PATENTSCHRIFT**

(45) Veröffentlichungstag und Bekanntmachung des Hinweises auf die Patenterteilung:
**12.11.2025   Patentblatt 2025/46**

(21) Anmeldenummer: **24217039.7**

(22) Anmeldetag: **03.12.2024**

(51) Internationale Patentklassifikation (IPC):
**H04L 9/08** (2006.01)

(52) Gemeinsame Patentklassifikation (CPC):
**H04L 9/0858**

(54) **VERFAHREN ZUR QUANTENSCHLÜSSELERZEUGUNG VON MEHREREN EMPFÄNGERN**

METHOD FOR QUANTUM KEY GENERATION FROM MULTIPLE RECEIVERS

PROCÉDÉ DE GÉNÉRATION DE CLÉ QUANTIQUE DE PLUSIEURS RÉCEPTEURS

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **06.12.2023   DE 102023134070**
**14.10.2024   DE 102024129672**

(43) Veröffentlichungstag der Anmeldung:
**11.06.2025   Patentblatt 2025/24**

(73) Patentinhaber: **Quantum Optics Jena GmbH 07745 Jena (DE)**

(72) Erfinder:
• **DE VRIES, Oliver**
**07745 Jena (DE)**
• **HEILMANN, René**
**99195 Schwansee (DE)**

(74) Vertreter: **Louis Pöhlau Lohrentz**
**Patentanwälte**
**Merianstrasse 26**
**90409 Nürnberg (DE)**

(56) Entgegenhaltungen:
**DE-A1- 102022 104 523**

• **FITZKE ERIK ET AL: "Scalable Network for Simultaneous Pairwise Quantum Key Distribution via Entanglement-Based Time-Bin Coding", vol. 3, no. 2, 1 May 2022 (2022-05-01), XP093237782, ISSN: 2691-3399, Retrieved from the Internet <URL:https://arxiv.org/pdf/2110.13795> DOI: 10.1103/PRXQuantum.3.020341**
• **WENGEROWSKY S�REN ET AL: "An entanglement-based wavelength-multiplexed quantum communication network", NATURE,, vol. 564, no. 7735, 12 December 2018 (2018-12-12), pages 225 - 228, XP036657342, DOI: 10.1038/S41586-018-0766-Y**

**Beschreibung**

Die Erfindung betrifft ein Verfahren zur Quantenschlüsselerzeugung zwischen mindestens vier Empfängern nach den Merkmalen des Oberbegriffs des Anspruchs 1 und ein System zur Quantenschlüsselerzeugung zwischen mindestens vier Empfängern nach den Merkmalen des Oberbegriffs des Anspruchs 15.

Bekannt sind Netzwerke zur Quantenschlüsselerzeugung mit verschränkten Photonenpaaren. In diesen Netzwerken sind mehrere Empfänger beispielsweise über eine Quelle miteinander verbunden. Bei einem derartigen Netzwerk steigt die Anzahl der physischen Verbindungen, d.h. der Quantenkanäle zwischen den Empfängern nur über die Relation i(i - 1)/2, wobei i die Anzahl der Empfänger ist. Im Gegensatz dazu sind in Netzwerken mit direkter Verbindung zwischen allen Empfängern eine Vielzahl an zusätzlichen Quantenkanälen notwendig.

In Netzwerken zur Quantenschlüsselerzeugung mit mehreren Empfängern, die über eine Quelle miteinander verbunden sind, werden mehrere in einer Verschränkungseigenschaft verschränkte Photonenpaare in der Quelle erzeugt und beispielsweise entsprechend der Wellenlänge den einzelnen Empfängern zugeordnet. Auf Basis der verschränkten Photonenpaare können zwischen allen Empfängern Quantenschlüssel erzeugt werden.

Zur Quantenschlüsselerzeugung muss die Verbindung zwischen den beiden Empfängern der verschränkten Photonenpaare bezüglich der gewählten Verschränkungseigenschaft abgeglichen sein. Dies bedeutet, dass sich beide Empfänger auf ein gemeinsames Bezugssystem der Verschränkungseigenschaft einigen. Diese Verschränkungseigenschaft kann beispielsweise die Polarisation, die Zeit und/oder die Mode der Photonen darstellen, wobei im Fall der Polarisation der Abgleich der Verbindung beispielsweise in einer Faser über eine Polarisationskontrolle erfolgt.

Ein derartiger Abgleich wird in bekannten Systemen immer zwischen zwei Empfängern durchgeführt. In bekannten Systemen mit mehreren Empfängern werden alle Empfänger auf ein Bezugssystem abgeglichen. Problematisch dabei ist, dass sich das gleichzeitige Abgleichen zwischen mehreren Empfängern gegenseitig stört und dies nur durch mehrmalige Abgleichschritte zwischen allen Empfängern möglich ist, um sich schrittweise anzunähern, da die mehreren Empfänger zum Teil dieselbe Faser benutzen. In bekannten Netzwerken wird diese gegenseitige Störung akzeptiert, was zu einer geringeren Qualität der Verbindung zwischen allen Empfängern führt, wodurch die Erzeugungsrate der Quantenschlüsselerzeugung stark reduziert wird. Weiter ist ein derartiges gleichzeitiges Abgleichen zwischen mehreren Empfängern sehr zeitintensiv und sehr ressourcenintensiv. FITZKE ERIK ET AL: "Scalable Network for Simultaneous Pairwise Quantum Key Distribution via Entanglement-Based Time-Bin Coding", PRX QUANTUM, Bd. 3, Nr. 2, 1. Mai 2022 (2022-05-01), XP093237782, ISSN: 2691-3399, DOI: 10.1103/ PRXQuantum.3.020341 Gefunden im Internet:URL:https://arxiv.org/pdf/2110.13795 beschreibt ein Verfahren und System zur Erzeugung von Quantenschlüsseln zwischen zumindest 4 teilnehmenden Parteien mittels einer Synchronisierung der Kanäle.

Der vorliegenden Erfindung liegt die Aufgabe zugrunde ein verbessertes, effizienteres, schnelleres und robusteres Verfahren zur

Quantenschlüsselerzeugung zwischen mindestens vier Empfängern und eine entsprechende Vorrichtung bereitzustellen.

Die Aufgabe wird erfindungsgemäß durch ein Verfahren zur

Quantenschlüsselerzeugung zwischen mindestens vier Empfängern nach den Merkmalen des Anspruchs 1 gelöst.

Erfindungsgemäß wird ein Verfahren zur Quantenschlüsselerzeugung mit verschränkten Photonenpaaren zwischen mindestens vier Empfängern vorgeschlagen, wobei jeweils zwei Empfänger eines verschränkten Photonenpaares eine Verbindung $V_j$ zur Quantenschlüsselerzeugung ausbilden, mit folgenden Schritten:

> i) Erzeugung verschränkter Photonenpaare in einer Quelle, wobei jedes Photonenpaar ein Signal-Photon und ein Idler-Photon aufweist, welche in einer Verschränkungseigenschaft miteinander verschränkt sind;
>
> ii) Aufteilen der Signal-Photonen und der Idler-Photonen anhand ihrer Wellenlänge auf Quantenkanäle der mehreren Empfänger und Übertragen der Signal-Photonen und der Idler-Photonen über die Verbindungen $V_j$ bildenden Quantenkanäle von der Quelle zu den Empfängern;
>
> iii) Detektion der Signal-Photonen und der Idler-Photonen bei den jeweiligen Empfängern;
>
> iv) Quantenschlüsselerzeugung zwischen den Empfängern der verschränkten Photonenpaare.

Wesentlich dabei ist, dass zur Quantenschlüsselerzeugung zwischen allen Empfängern mehrere Zeitspannen gebildet werden, wobei in jeder Zeitspanne jeweils die Schritte i) bis iii) durchgeführt werden, und

dass in jeder Zeitspanne jeweils vor und/oder während Schritt ii) nur zwischen zwei oder mehreren Verbindungen $V_j$ ein Abgleich der Verschränkungseigenschaft durchgeführt wird, welche unabhängig voneinander abgeglichen werden können, um in diesen zwei oder mehreren Verbindungen $V_j$ eine Quantenschlüsselerzeugung zu ermöglichen, und

dass sich die Zeitspannen derart unterscheiden, dass jeweils mindestens eine Verbindung $V_j$ durch eine andere

Verbindung $V_j$ ausgetauscht ist, in welcher eine Quantenschlüsselerzeugung noch nicht möglich war, um durch die mehreren Zeitspannen eine Quantenschlüsselerzeugung zwischen allen Empfängern durchzuführen, und/oder dass in der letzten Zeitspanne eine Verbindung $V_j$, oder mehrere der Verbindungen $V_j$, oder alle Verbindungen $V_j$, wiederholt werden, die bereits in vorherigen Zeitspannen gebildet wurden, um eine erneute Quantenschlüsselerzeugung durchzuführen.

Weiter wird die Aufgabe erfindungsgemäß durch ein System zur Quantenschlüsselerzeugung mit verschränkten Photonenpaaren zwischen mindestens vier Empfängern nach den Merkmalen des Anspruchs 15 gelöst.

Erfindungsgemäß wird ein System zur Quantenschlüsselerzeugung mit verschränkten Photonenpaaren zwischen mindestens vier Empfängern vorgeschlagen,

wobei das System eine Quelle, einen Frequenz-Multiplexer, mehrere Quantenkanäle und die mehreren Empfänger aufweist, wobei die mehreren Empfänger über jeweils einen Quantenkanal mit der Quelle verbunden sind, wobei die Quelle zur Erzeugung verschränkter Photonenpaare mit jeweils einem Signal-Photon und einem Idler-Photon ausgebildet ist, welche in einer Verschränkungseigenschaft miteinander verschränkt sind,
wobei die Quantenkanäle jeweils zweier Empfänger eines verschränkten Photonenpaares eine Verbindung $V_j$ zur Quantenschlüsselerzeugung ausbilden, wobei in oder nach der Quelle der Frequenz-Multiplexer angeordnet ist, welcher dazu ausgebildet ist die Signal-Photonen und Idler-Photonen anhand ihrer Wellenlänge auf die Quantenkanäle der mehreren Empfänger aufzuteilen,
wobei jeder Empfänger ein Detektionsmodul aufweist, welches ein Messmodul und mindestens einen Detektor aufweist, welche ausgebildet sind, die Verschränkungseigenschaft der Photonen zur Quantenschlüsselerzeugung zu detektieren,
wobei das System Abgleicheinrichtungen aufweist, welche in den Empfängern oder in den Quantenkanälen zu den Empfängern angeordnet sind und ausgebildet sind, einen Abgleich der Verschränkungseigenschaft der verschränkten Photonenpaare bezüglich zweier Empfänger durchzuführen.

Wesentlich dabei ist, dass das System zusätzlich eine Steuervorrichtung aufweist und die Steuervorrichtung mit jeder Abgleicheinrichtung verbunden ist, und dass die Steuervorrichtung ausgebildet ist, zur Quantenschlüsselerzeugung zwischen allen Empfängern die Abgleicheinrichtungen in mehreren Zeitspannen anzusteuern, vorzugsweise zur Durchführung des Verfahrens zur Quantenschlüsselerzeugung gemäß den Schritten i) bis iv),

wobei die Steuervorrichtung ausgebildet ist, in jeder Zeitspanne nur die Abgleicheinrichtungen zwischen zwei oder mehreren Verbindungen $V_j$ anzusteuern, welche unabhängig voneinander abgeglichen werden können, um in diesen zwei oder mehreren Verbindungen $V_j$ eine Quantenschlüsselerzeugung zu ermöglichen,
wobei die Steuervorrichtung ausgebildet ist, in jeder Zeitspanne die Ansteuerung der Abgleicheinrichtung jeweils mindestens einer Verbindung $V_j$ durch die Ansteuerung der Abgleicheinrichtung einer anderen Verbindung $V_j$ zu ersetzen, in welcher eine Quantenschlüsselerzeugung noch nicht möglich war, um durch die mehreren Zeitspannen eine Quantenschlüsselerzeugung zwischen allen Empfängern durchzuführen, und/oder dass in der letzten Zeitspanne eine Verbindung $V_j$, oder mehrere der Verbindungen $V_j$, oder alle Verbindungen $V_j$, wiederholt werden, die bereits in vorherigen Zeitspannen gebildet wurden, um eine erneute Quantenschlüsselerzeugung durchzuführen.

Ein Vorteil des erfindungsgemäßen Verfahrens und des erfindungsgemäßen Systems liegt darin, dass durch die zeitliche Rotation des Abgleichs und damit zur Quantenschlüsselerzeugung in den Zeitspannen zwischen allen Empfänger ein Vorrat von Quantenschlüsseln erzeugt wird. Nach dem Durchlaufen der mehreren Zeitspannen werden alle Empfänger untereinander mit verschränkten Photonenpaaren bedient, wobei erfindungsgemäß in mindestens einer Zeitspanne jede Verbindung mindestens einmal zwischen jedem Empfänger zur Quantenschlüsselerzeugung abgeglichen wurde.

In dem erfindungsgemäßen Verfahren und dem erfindungsgemäßen System werden durch das Durchrotieren der Verbindungen $V_j$ bei allen Empfängern Quantenschlüssel erzeugt, damit nach den mehreren Zeitspannen jeder Empfänger einen Quantenschlüssel mit jedem anderen Empfänger erzeugt hat.

Vorteilhaft ist dabei, dass durch das Abgleichen der Verschränkungseigenschaften jeweils nur zwischen unabhängigen Verbindungen in den Zeitspannen das Verfahren und das System derart optimiert werden, dass durch die erfindungsgemäße zeitliche Einteilung des Abgleichs eine bessere Erzeugungsrate für die Quantenschlüsselerzeugung zwischen allen Empfängern erhalten wird. Die bessere Erzeugungsrate wird erhalten, da durch das erfindungsgemäße Verfahren und das erfindungsgemäße System die Verbindungen $V_j$ präziser und schneller abgeglichen werden können. Dies liegt daran, dass erfindungsgemäß gleichzeitig mehrere, aber immer nur voneinander unabhängige Verbindungen $V_j$ abgeglichen werden, wodurch sich das Abgleichen nicht gegenseitig stört.

Im Falle, dass in der letzten Zeitspanne eine Verbindung $V_j$, oder mehrere der Verbindungen $V_j$, oder alle

Verbindungen $V_j$, wiederholt werden, die bereits in vorherigen Zeitspannen gebildet wurden, um eine erneute Quantenschlüsselerzeugung durchzuführen, kann vorzugsweise in der letzten Zeitspanne ein schnellerer Abgleich durchgeführt werden, indem die bekannten Abgleichwerte der vorherigen Verbindungen $V_j$ als Ausgangswerte für den Abgleich verwendet werden.

Weiter ist auch vorteilhaft, dass die erfindungsgemäße Quantenschlüsselerzeugung schneller durchgeführt werden kann und somit präziser und schneller Umgebungseffekte, wie Temperaturschwankungen oder Erschütterungen, ausgeglichen werden können, da die Abgleiche sich nicht gegenseitig stören. Durch die fehlende gegenseitige Störung des Abgleichens der mehreren Verbindungen $V_j$ sind keine iterativen Abgleichschritte zwischen mehreren Verbindungen $V_j$ notwendig.

Zusätzlich ist vorteilhaft, dass das erfindungsgemäße System kostengünstig zur Verfügung gestellt werden kann, da weniger Abgleicheinrichtungen notwendig sind, da für jede Verbindung $V_j$ nur eine Abgleicheinrichtung benötigt wird.

Ein weiterer Vorteil des erfindungsgemäßen Verfahrens und Netzwerks ist die direkte Verbindung der Quelle jeweils durch einen Quantenkanal mit jedem Empfänger. Dadurch steigt die Anzahl der physischen Verbindungen, d.h. der Quantenkanäle nur über die Relation $i(i-1)/2$. Im Gegensatz dazu wäre für ein Netzwerk mit direkter Verbindung der einzelnen Empfänger untereinander eine Vielzahl an zusätzlichen Quantenkanälen notwendig.

Ein weiterer Vorteil des erfindungsgemäßen Verfahrens und Netzwerks ist, dass die letzte Zeitspanne genutzt werden kann, um eine Verbindung $V_j$, oder mehrere der Verbindungen $V_j$, oder alle Verbindungen $V_j$, zu wiederholen, die bereits in vorherigen Zeitspannen gebildet wurden. Dadurch ist es möglich in einem Durchlauf mehrere Quantenschlüssel zu erzeugen. Vorzugsweise können dadurch nach dem vollständigen Durchlaufen der mehreren Zeitspannen je Verbindung $V_j$ wenigstens zwei Quantenschlüssel erzeugt werden. Dies ermöglicht eine schnelle Erzeugung mehrerer Quantenschlüssel.

Das Verfahren und das System zur Quantenschlüsselerzeugung umfassen mindestens vier Empfänger, vorzugsweise $i$ Empfänger $E_p$ mit der Anzahl $i$ gleich einer natürlichen Zahl gleich oder größer 4 und mit der Nummerierung $p$ gleich einer natürlichen Zahl.

Zwei Empfänger $E_p$ eines verschränkten Photonenpaares bilden eine Verbindung $V_j$ mit der Nummerierung j gleich einer natürlichen Zahl. Insgesamt sind zwischen allen Empfängern $s$ Verbindungen $V_j$ möglich, mit $s \geq \frac{i(i-1)}{2}$. In jeder Zeitspanne $t_k$ werden $r$ Verbindungen $V_j$ abgeglichen, mit der Anzahl $r$ gleich einer natürlichen Zahl größer 2 und kleiner $s$.

Das Verfahren und das System zur Quantenschlüsselerzeugung verwenden mehrere Zeitspannen $t_k$, vorzugsweise $q$ Zeitspannen $t_k$ mit der Anzahl $q$ gleich einer natürlichen Zahl gleich oder größer 2 und mit der Nummerierung $k$ gleich einer natürlichen Zahl. Dies bedeutet, dass innerhalb der mehreren, vorzugsweise der $q$ Zeitspannen $t_k$ eine Quantenschlüsselerzeugung zwischen allen Empfängern durchgeführt wird. Dabei kann die Durchführung einer Quantenschlüsselerzeugung mit den $q$ Zeitspannen $t_k$ auch als eine vollständige Rotation bezeichnet werden.

Aus dem erfindungsgemäßen Verfahren und dem erfindungsgemäßen System ergibt sich ein verbesserter zeitlicher Effizienzfaktor zur Erzeugung von Quantenschlüsseln mit $\frac{s}{q} > 1$. Der zeitliche Effizienzfaktor beschreibt dabei die Steigerung der Erzeugungsrate zu einem Verfahren und einem System, in dem immer nur zwischen zwei Empfängern ein Quantenschlüssel erzeugt wird. Ein Vergleich mit einem Verfahren und einem System, in dem alle Verbindungen gleichzeitig abgeglichen werden, unterscheidet sich sehr stark durch die jeweilige Qualität des Abgleichs zwischen allen Verbindungen.

Vorteilhafterweise reduziert sich mit dem erfindungsgemäßen Verfahren und dem erfindungsgemäßen System also die für eine Anzahl s an Verbindungen $V_j$ benötigte Anzahl $q$ an Zeitspannen $t_k$.

Wesentlich ist, dass zur Quantenschlüsselerzeugung in einer bestimmten Zeitspanne $t_k$ nur die Verbindungen $V_j$ verwendet werden, in denen der Abgleich erfolgt ist.

Unter mindestens vier Empfängern, vorzugsweise zwischen $i$ Empfängern $E_p$ mit $i$ gleich einer natürlichen Zahl gleich oder größer 4 und mit $p$ gleich einer natürlichen Zahl ist hier zu verstehen, dass die Quantenschlüsselerzeugung zwischen vier Empfängern, oder fünf Empfängern, oder sechs Empfängern, oder sieben Empfängern oder mehreren Empfängern durchgeführt wird.

Unter Quantenschlüsselerzeugung zwischen allen der mindestens vier Empfänger ist dabei zu verstehen, dass jeder Empfänger jeweils einen Quantenschlüssel mit jedem anderen Empfänger erzeugt. Beispielsweise wird bei vier Empfängern zwischen dem ersten Empfänger $E_1$ und dem zweiten Empfänger $E_2$, und zwischen dem ersten Empfänger $E_1$ und dem dritten Empfänger $E_3$, und zwischen dem ersten Empfänger $E_1$ und dem vierten Empfänger $E_4$, und zwischen dem zweiten Empfänger $E_2$ und dem dritten Empfänger $E_3$, und zwischen dem zweiten Empfänger $E_2$ und dem vierten Empfänger $E_4$, und zwischen dem dritten Empfänger $E_3$ und dem vierten Empfänger $E_4$ jeweils ein Quantenschlüssel

erzeugt.

Weiter ist unter Quantenschlüsselerzeugung zwischen allen der mindestens vier Empfänger zu verstehen, dass zwischen diesen mindestens vier Empfängern ein Quantenschlüssel erzeugt wird. Es können weitere Empfänger in dem System mit der Quelle verbunden sein, welche zum Zeitpunkt der Quantenschlüsselerzeugung zwischen den vier Empfängern in den Zeitspannen keinen Quantenschlüssel erzeugen, aber in einer danach durchgeführten Quantenschlüsselerzeugung auch ein teilnehmender Empfänger sind.

Unter der Erzeugung von mehreren verschränkten Photonenpaaren in der Quelle und in Schritt i) ist zu verstehen, dass mehrere verschränkte Photonenpaare gleichzeitig und/oder nacheinander in der Quelle erzeugt werden können. Gleichzeitig bedeutet dabei, dass mehrere verschränkte Photonenpaare zur selben oder annähernd selben Zeit erzeugt werden, wobei sich die Wellenlängen dieser verschränkten Photonenpaare voneinander unterscheiden. Nacheinander bedeutet dabei, dass zeitlich nacheinander mehrere verschränkte Photonenpaare erzeugt werden können, wobei diese Photonenpaare die gleiche Wellenlänge oder unterschiedliche Wellenlängen aufweisen können. Durch die zeitlich nacheinander erzeugten verschränkten Photonenpaare mit gleicher Wellenlänge wird die Länge des Quantenschlüssels zwischen zwei bestimmten Empfängern vergrößert. Durch verschränkte Photonenpaare mit unterschiedlichen Wellenlängen wird eine Quantenschlüsselerzeugung zwischen mehreren verschiedenen Empfängern der mehreren Verbindungen $V_j$ ermöglicht. Dies gilt in gleicher Weise für die Schritte ii), iii) und iv), wobei in Schritt ii) gleichzeitig und/oder nacheinander mehrere Signal-Photonen und Idler-Photonen von verschiedenen verschränkten Photonenpaaren auf die Quantenkanäle aufgeteilt und in diese übertragen werden, und in Schritt iii) gleichzeitig bei mehreren Empfängern oder nacheinander bei einem oder mehreren Empfängern die Photonen detektiert werden und in Schritt iv) gleichzeitig und/oder nacheinander mehrere Quantenschlüssel zwischen mehreren Empfängern erzeugt werden.

Unter Verfahren zur Quantenschlüsselerzeugung mit verschränkten Photonenpaaren ist zu verstehen, dass die Schritte i), ii) und iii) für jeweils ein verschränktes Photonenpaar nacheinander durchlaufen werden, die Schritte i), ii) und iii) können aber auch für mehrere Photonenpaare mit unterschiedlicher Wellenlänge gleichzeitig durchlaufen werden.

Abgleich der Verschränkungseigenschaft bedeutet, dass das Bezugssystem der Verschränkungseigenschaft, das zur Messung eines Photonenpaares in dem Detektionsmodul bei der Detektion in Schritt iii) verwendet wird, vor und/oder während Schritt ii) bei den beiden entsprechenden Empfängern aufeinander abgestimmt wird. Beispielsweise wird im Falle von Photonenpaaren, die in der Polarisation verschränkt sind, die Polarisation bei den jeweiligen Detektionsmodulen mit einer Übertragung über die entsprechende Verbindung $V_j$ als Bezugssystem aufeinander abgestimmt, wobei eine eventuelle Polarisationsdrehung, beispielsweise durch die Übertragung der Photonen in Fasern oder Anordnung der Elemente des Systems, durch sogenannte Polarisationskontroller ausgeglichen werden kann. Dazu wird beispielsweise bei einem ersten Empfänger ein Laserstrahl mit einer definierten Polarisation in einer Basis, beispielsweise horizontal polarisiert, zu einem zweiten Empfänger übermittelt und beim zweiten Empfänger die Polarisation des Laserstrahls in dieser Basis gemessen. Der Abgleich des Quantenkanals in der ersten Basis kann beispielsweise durch Minimierung des Laserstrahls beim zweiten Empfänger bei einer Messung in der vertikalen Polarisation erfolgen. Diese Minimierung wird in einem weiteren Schritt für eine zweite Basis durchgeführt, welche orthogonal zur ersten Basis ist, beispielsweise für den +/- 45° horizontal polarisierten Laserstrahl. Bei einer Verschränkung der Photonenpaare in der Zeit wird ein Phasenabgleich in den jeweiligen Interferometern der Empfänger durchgeführt. Weiter ist wesentlich, dass in dem erfindungsgemäßen Verfahren und dem erfindungsgemäßen System in jeder einzelnen Zeitspanne $t_k$ nur Verbindungen $V_j$ abgeglichen werden, für die ein unabhängiger Abgleich möglich ist, d.h. die sich nicht gegenseitig stören oder beeinflussen. Dadurch kann der Abgleich viel präziser und schneller erfolgen, was zu einer höheren Erzeugungsrate des Quantenschlüssels führt. Nur zwischen zwei oder mehreren Verbindungen $V_j$ bedeutet, dass mindestens zwei Verbindungen $V_j$ und maximal alle weiteren möglichen Verbindungen $V_j$ in einer Zeitspanne abgeglichen werden, welche unabhängig voneinander abgeglichen werden können.

Abgleich der Verbindung $V_j$ unabhängig voneinander in einer Zeitspanne $t_k$ bedeutet, dass sich das Abstimmen des Bezugssystems der Empfänger und der Verbindungen $V_j$ in dieser Zeitspanne $t_k$ nicht gegenseitig stört oder beeinflusst. Dadurch kann die Qualität der Übertragung und Detektion der Photonen wesentlich verbessert werden, was zu einer höheren Erzeugungsrate des Quantenschlüssels führt. Beispielsweise kann bei vier Empfängern die Verbindung $V_1$ zwischen dem ersten Empfänger $E_1$ und dem zweiten Empfänger $E_2$ unabhängig von der Verbindung $V_2$ zwischen dem dritten Empfänger $E_3$ und dem vierten Empfänger $E_4$ abgeglichen werden. Weiter beispielhaft kann bei vier Empfängern die Verbindung $V_1$ zwischen dem ersten Empfänger $E_1$ und dem zweiten Empfänger $E_2$ unabhängig von der Verbindung $V_2$ zwischen dem ersten Empfänger $E_1$ und dem dritten Empfänger $E_3$ abgeglichen werden, wenn der Abgleich der Verbindung $V_1$ beim zweiten Empfänger $E_2$ erfolgt und der Abgleich der Verbindung $V_2$ beim dritten Empfänger $E_3$ erfolgt, wobei dagegen ein Abgleich der Verbindung $V_1$ beim zweiten Empfänger $E_2$ und der Abgleich der Verbindung $V_2$ beim ersten Empfänger $E_1$ den Abgleich der Verbindung $V_1$ stören würde.

Mindestens eine Verbindung $V_j$ durch eine andere Verbindung $V_{j+x}$, mit x als ganze Zahl, austauschen bedeutet, dass nur eine Verbindung $V_j$ der vorangehenden Zeitspanne $t_k$ ausgetauscht wird und durch eine Verbindung $V_{j+x}$ ersetzt wird, in welcher eine Quantenschlüsselerzeugung noch nicht möglich war, oder dass zwei Verbindungen $V_j$, $V+_1$ der vorangehenden Zeitspanne $t_k$ ausgetauscht werden und durch zwei Verbindungen $V_{j+x1}$, $V_{j+x2}$ ersetzt werden, in welchen eine Quantenschlüsselerzeugung noch nicht möglich war, und so weiter für drei, vier und mehrere Verbindungen, oder dass alle Verbindungen der vorangehenden Zeitspanne $t_k$ ausgetauscht werden und durch die entsprechende Anzahl von Verbindungen ersetzt werden, in welchen eine Quantenschlüsselerzeugung noch nicht möglich war.

Eine Verbindung $V_j$, in welcher eine Quantenschlüsselerzeugung noch nicht möglich war bedeutet, dass für diese Verbindung $V_j$ noch nicht die Schritte i) bis iii) durchlaufen wurden, während diese Verbindung $V_j$ vor und/oder während Schritt ii) unabhängig abgeglichen wurde. Dies bedeutet, dass im Sinne des hier genannten Verfahrens und des hier genannten Systems eine Quantenschlüsselerzeugung zwischen zwei Empfängern nur als möglich bezeichnet ist, wenn die entsprechende Verbindung $V_j$ vor und/oder während der Übertragung der Photonen in Schritt ii) abgeglichen wurde und/oder wird. Falls ein Abgleich nicht erfolgt, können zwar Photonen gemessen werden, allerdings kann durch die verschiedenen Bezugssysteme der Empfänger kein gemeinsamer Schlüssel erzeugt werden.

Um durch die mehreren Zeitspannen $t_k$ eine Quantenschlüsselerzeugung zwischen allen Empfängern durchzuführen bedeutet, dass nach den mehreren Zeitspannen $t_k$ für alle möglichen Verbindungen zwischen allen Empfängern die Schritte i), ii), iii) und iv) durchlaufen wurden und dass für alle Verbindungen $V_j$ vor und/oder während Schritt ii) in mindestens einer Zeitspanne $t_k$ dabei ein Abgleich erfolgt ist.

Es kann vorgesehen sein, dass die mehreren Zeitspannen mehrmals wiederholt werden, vorzugsweise nacheinander mehrmals wiederholt werden, vorzugsweise ein zweites Mal, oder ein drittes Mal, oder ein viertes Mal oder öfter wiederholt werden. Dies bedeutet, dass jeweils eine vollständige Rotation nacheinander wiederholt wird. Dadurch können über einen längeren Zeitraum Quantenschlüssel zwischen allen Empfängern erzeugt werden.

Es kann vorgesehen sein, dass zur Quantenschlüsselerzeugung die Zeitspannen $t_k$ sequenziell durchgeführt werden. Dies bedeutet, dass zur Quantenschlüsselerzeugung die Zeitspannen $t_k$ direkt aufeinanderfolgend gebildet werden. Direkt aufeinanderfolgend bedeutet dabei, dass keine anderweitigen Verbindungen dazwischen bedient werden. Direkt aufeinanderfolgend bedeutet weiter, dass zwischen den Zeitspannen $t_k$ in einem Zeitfenster keine Verbindungen $V_j$ bedient werden, beispielsweise um Wartungsarbeiten durchzuführen. Daraus ergibt sich vorteilhaft eine einfache Erzeugung der Quantenschlüssel zwischen allen Empfängern.

Es kann vorgesehen sein, dass zur Quantenschlüsselerzeugung die Zeitspannen $t_k$ nicht sequenziell durchgeführt werden. Dies bedeutet, dass zur Quantenschlüsselerzeugung die Zeitspannen $t_k$ nicht direkt aufeinanderfolgend gebildet werden. Zwischen zwei Zeitspannen $t_k$ können somit andere Verbindungen bedient werden. Unter anderen Verbindungen können dabei ein oder mehrere Verbindungen $V_j$ aus einer der mehreren Zeitspannen $t_k$ verstanden werden, oder mehrere Verbindungen, welche nicht unabhängig voneinander abgeglichen werden können. Durch eine nicht sequenzielle Durchführung ergibt sich vorteilhaft, dass bestimmte Verbindungen $V_j$ mehrmals bedient werden können, beispielsweise falls ein erhöhter Bedarf an Quantenschlüsseln zwischen zwei bestimmten Empfängen vorhanden ist. Bei Verbindungen $V_j$, die weiterhin auch unabhängig abgeglichen werden können, ergibt sich weiterhin vorteilhaft die höhere Qualität und Erzeugungsrate. Somit kann bei einer nicht sequenziellen Durchführung nach einer der mehreren Zeitspannen $t_k$ eine der Zeitspannen $t_k$ wiederholt werden oder eine neue Zeitspanne eingefügt werden, in der Verbindungen $V_j$ bedient werden, welche unabhängig voneinander abgeglichen werden können. Falls notwendig, können auch Verbindungen zwischen zwei Zeitspannen bedient werden, welche nicht unabhängig voneinander abgeglichen werden können, wobei sich in diesen Verbindungen ein erhöhter Justagebedarf oder eine schlechtere Erzeugungsrate ergibt.

Es kann vorgesehen sein, dass in Schritt i) die verschränkten Photonenpaare durch einen nicht-linearen Prozess erzeugt werden, vorzugsweise durch Parametrische Fluoreszenz (down-conversion), oder spontane Parametrische Fluoreszenz (spontaneous parametric down-conversion), oder Vierwellenmischung (four-wave mixing). Es kann vorgesehen sein, dass die Quelle einen oder mehrere nicht-linear Kristalle aufweist, welche ausgebildet sind, verschränkte Photonenpaare durch einen nicht-linearen Prozess zu erzeugen, vorzugsweise durch Parametrische Fluoreszenz (down-conversion), oder spontane Parametrische Fluoreszenz (spontaneous parametric down-conversion), oder Vierwellenmischung (four-wave mixing). Durch diese nicht-linearen Prozesse können in einfacher Weise verschränkte Photonenpaare in verschiedenen Wellenlängenbereichen erzeugt werden.

Es kann vorgesehen sein, dass die verschränkten Photonenpaare in der Zeit, und/oder der Polarisation, und/oder im Bahndrehimpuls, und/oder im Spin-Drehimpuls verschränkt sind. Der Vorteil der Verwendung von in der Zeit verschränkten Photonenpaaren ist eine robuste Verschränkung. Der Vorteil der Verwendung von in der Polarisation verschränkten Photonenpaaren ist die einfache Erzeugung und der einfache Abgleich, sowie eine mögliche Automatisierung des Abgleichs. Der Vorteil der Verwendung von im Bahndrehimpuls, und/oder im Spin-Drehimpuls verschränkten Photonenpaaren sind die möglichen hohen Dimensionen der Photonenpaare.

Es kann vorgesehen sein, dass zum Abgleich von in der Polarisation verschränkten Photonenpaaren eine Polarisationsdrehung in der Verbindung $V_j$ ausgeglichen wird. Es kann vorgesehen sein, dass die Abgleicheinrichtung für in der Polarisation verschränkte Photonenpaare ein oder mehrere Wellenlängenplättchen, und/oder Faserquetscher (fiber squeezer), und/oder Polarisationskontroller, und/oder Flüssigkristalle aufweist. Die mehreren Bauteile können auch miteinander kombiniert werden, wodurch eine noch präzisere Justage möglich wird. Der Vorteil einer derartigen Ausbildung liegt im einfach kontrollierbaren Abgleich, welcher auch automatisiert werden kann und den kostengünstigen Bauteilen.

Es kann vorgesehen sein, dass zum Abgleich von in der Zeit verschränkten Photonenpaaren eine Zeitspanne in der Verbindung $V_j$ ausgeglichen wird. Es kann vorgesehen sein, dass die Abgleicheinrichtung für in der Zeit verschränkte Photonenpaare eine oder mehrere optische Verzögerungsmittel aufweist. Der Vorteil einer derartigen Ausbildung liegt in der sehr präzisen und einfachen Kontrolle des Abgleichs.

Es kann vorgesehen sein, dass zum Abgleich von im Bahndrehimpuls, und/oder im Spin-Drehimpuls verschränkten Photonenpaaren eine Drehimpulsänderung in der Verbindung $V_j$ ausgeglichen wird. Es kann vorgesehen sein, dass die Abgleicheinrichtung für im Bahndrehimpuls, und/oder im Spin-Drehimpuls verschränkte Photonenpaare ein oder mehrere Wellenlängenplättchen, und/oder räumlichen Modulator (spatial light modulator SLM) aufweist. Der Vorteil einer derartigen Ausbildung liegt im einfach kontrollierbaren Abgleich, welcher auch automatisiert werden kann.

Es kann vorgesehen sein, dass jeder Empfänger oder jeder Quantenkanal eines Empfängers eine Abgleicheinrichtungen aufweist. Vorteilhaft ergibt sich daraus, dass für das erfindungsgemäße Verfahren und das erfindungsgemäße System nicht alle Abgleicheinrichtungen zum Abgleichen aller möglichen Verbindungen $V_j$ benötigt werden und somit ein ausfallsicheres System zur Verfügung gestellt wird, in dem der Abgleich in einer ausgefallenen Abgleicheinrichtungen durch eine noch nicht verwendete Abgleicheinrichtung ersetzt werden kann. Wesentlich ist, dass für das erfindungsgemäße Verfahren und das erfindungsgemäße System zum Abgleichen aller Verbindungen $V_j$ nur $i$ - 1 Abgleicheinrichtungen notwendig sind, bei einem Verfahren und einem System mit $i$ Empfängern. Es kann vorgesehen sein, dass das System nur $i$ - 1 Abgleicheinrichtungen aufweist. Damit kann ein kostengünstiges System zur Verfügung gestellt werden.

Es kann vorgesehen sein, dass der Abgleich je Verbindung $V_j$ vor und/oder während Schritt ii) nur durch eine Abgleicheinrichtung erfolgt, angeordnet bei einem der beiden Empfänger oder in einem der beiden Quantenkanäle. Vorteilhafterweise ergibt sich aus der Anordnung der Quelle, der Empfänger und den Quantenkanälen, dass sich in einer derartigen Ausgestaltung der Abgleich der gesamten Verbindung $V_j$ durchführen lässt durch eine einzige Abgleicheinrichtung, welche irgendwo zwischen den beiden Empfängern angeordnet ist. Somit vereinfacht sich der Abgleichprozess. Eine Abgleicheinrichtung, welche direkt beim jeweiligen Empfänger angeordnet ist, ist besonders gegen Beeinflussung von außen, d.h. versuchte Manipulation und Störungen geschützt, da zur Justage keine zusätzliche Kommunikation zwischen dem Empfänger und der Abgleicheinrichtung über öffentliche Kanäle notwendig ist.

Es kann vorgesehen sein, dass der Abgleich vor und/oder in Schritt ii) durch eine Steuervorrichtung durchgeführt, überwacht und/oder geregelt wird, welche mit allen Abgleicheinrichtungen verbunden ist. Es kann vorgesehen sein, dass die Steuervorrichtung bei einem der Empfänger angeordnet ist. Es kann vorgesehen sein, dass die Steuervorrichtung als Computer oder integrierter Schaltkreis (IC), vorzugsweise als FPGA-Element (Field Programmable Gate Array) ausgebildet ist. Es kann vorgesehen sein, dass der Computer oder integrierter Schaltkreis (IC), vorzugsweise als FPGA-Element (Field Programmable Gate Array) ein Speichermedium umfasst, welches Befehle umfasst, die bei der Ausführung durch den Computer oder integrierten Schaltkreis (IC), vorzugsweise als FPGA-Element (Field Programmable Gate Array), diesen veranlassen, den Abgleich vor und/oder während Schritt ii) auszuführen. Vorteilhaft ergibt sich durch eine derartige Ausbildung eine mögliche Automatisierung des Verfahrens.

Es kann vorgesehen sein, dass in Schritt i) verschränkte Photonenpaare mit Wellenlängen erzeugt werden, welche zufällig über ein breites Spektrum verteilt sind oder gezielt verschränkte Photonenpaare mit bestimmten Wellenlängen erzeugt werden. Es kann vorgesehen sein, dass in Schritt i) verschränkte Photonenpaare in jeder Zeitspanne $t_k$ für alle möglichen Verbindungen $V_j$ erzeugt werden, oder dass in Schritt i) verschränkte Photonenpaare in jeder Zeitspanne $t_k$ nur für die darin auch abgeglichenen Verbindungen $V_j$ erzeugt werden. Der Vorteil der Erzeugung von Photonen in einem breiten Spektrum ist die kostengünstige Bereitstellung der verschränkten Photonenpaare für eine Vielzahl von Empfängern. Der Vorteil der Erzeugung von Photonen mit bestimmten Wellenlängen liegt darin, dass für jede Verbindung $V_j$ in der entsprechenden Zeitspanne $t_k$ gezielt Photonen für diese Verbindungen $V_j$ erzeugt werden können, wodurch die Erzeugungsrate für die Quantenschlüsselerzeugung erhöht werden kann.

Es kann vorgesehen sein, dass die in Schritt i) erzeugten Photonen in einem spektral voneinander getrennten Signal-Wellenlängenbereich und Idler-Wellenlängenbereich erzeugt werden. Unter spektral voneinander unterscheiden ist hier zu verstehen, dass sich die Wellenlänge des Signal-Photons und des Idler-Photons der Paare unterscheiden, und dass sich die Wellenlängen der Paare voneinander unterscheiden. Dadurch ergibt sich der Vorteil einer einfacheren und verlustärmeren Aufteilung der Photonen in Schritt ii).

Es kann vorgesehen sein, dass die in Schritt i) erzeugten Photonenpaare für jede Verbindung $V_j$ spektral getrennt voneinander ausgebildet sind. Unter spektral getrennten verschränkten Photonenpaaren ist hier zu verstehen, dass einerseits die Signal- und Idler-Photonen eines Photonenpaares unterschiedliche Wellenlängen aufweisen, d.h. es gilt $\lambda_{sx} \neq \lambda_{ix}$. Dies wird auch als nicht entartetes (non-degenerated) Photonenpaar bezeichnet. Zusätzlich gilt für die mehreren spektral getrennten verschränkten Photonenpaare, dass sich die Wellenlängen der Signal-Photonen der Photonenpaare spektral voneinander unterscheiden, d.h. es gilt $\lambda_{sx} \neq \lambda_{s(x+1)}$. Dies gilt auch entsprechend für die Idler-Photonen, d.h. zusätzlich unterscheiden sich die Wellenlängen der Idler Photonen spektral voneinander, d.h. es gilt $\lambda_{ix} \neq \lambda_{i(x+1)}$. Wesentlich dabei ist, dass auch mehrere der spektral getrennten Photonenpaare zeitlich nacheinander erzeugt werden können, um einen längeren Quantenschlüssel zu erzeugen.

Es kann vorgesehen sein, dass der Frequenz-Multiplexer ausgebildet ist, die Aufteilung der Signal-Photonen und der Idler-Photonen in Schritt ii) durchzuführen.

Vorzugsweise ist unter Zuordnen der Signal- und Idler-Photonen anhand ihrer Wellenlänge auf die Quantenkanäle in Schritt ii) und durch den Frequenz-Multiplexer zu verstehen, dass die Quelle Signal- und Idler-Photonen mit verschiedenen Wellenlängen erzeugt und die Photonen, vorzugsweise in einer räumlichen Mode, zum Frequenz-Multiplexer übertragen werden. Der Frequenz-Multiplexer teilt die Signal- und Idler-Photonen entsprechend ihrer Wellenlänge auf die verschiedenen Quantenkanäle auf.

Es kann vorgesehen sein, dass einer oder mehrere oder alle Quantenkanäle als Glasfaserkanäle ausgebildet sind und/oder Glasfaserstrecken aufweisen. Unter Glasfaserstrecken ist dabei zu verstehen, dass nicht die gesamte Übertragung durch eine Glasfaser erfolgt, sondern dass über Teilbereiche auch Freistrahlstrecken möglich sind. Der Vorteil einer derartigen Ausgestaltung liegt im kostengünstigen und einfachen Aufbau des Netzwerks.

Es kann vorgesehen sein, dass die Detektion in Schritt iii) bei jedem Empfänger durch ein Detektionsmodul erfolgt. Es kann vorgesehen sein, dass jedes Detektionsmodul einen oder mehrere Detektoren und ein Messmodul aufweist. Anhand des Messmoduls und der Detektoren kann die Verschränkungseigenschaft der Photonen zur Quantenschlüsselerzeugung sowie die Zeit der Detektion des Photons bestimmt werden.

Es kann vorgesehen sein, dass der mindestens eine Detektor oder die mehreren Detektoren als Einzelphoton-Detektoren ausgebildet sind, vorzugsweise als Germanium- oder Silizium-Detektoren, oder Einzelphotonen-Lawinendioden oder Indium-Gallium-Arsenit Detektoren, oder supraleitende Nanodraht-Einzelphoton-Detektoren, oder Silizium-Avalanche Photodioden ausgebildet sind.

Es kann vorgesehen sein, dass das Messmodul einen Polarisator, und/oder ein unsymmetrisches Interferometer, und/oder einen Spatial Light Modulator (SLM) aufweist.

Es kann vorgesehen sein, dass der Empfänger mehrere Detektionsmodule aufweist. Es kann vorgesehen sein, dass die mehreren Detektionsmodule eines Empfängers Photonen in verschiedenen Wellenlängenbereichen detektieren. Es kann vorgesehen sein, dass in Schritt iii) ein oder mehrere Empfänger gleichzeitig mehrere Signal-Photonen und/oder Idler-Photonen mit unterschiedlichen Wellenlängen detektiert. Dadurch kann der Empfänger gleichzeitig Quantenschlüssel mit mehreren anderen Empfängern erzeugen, da gleichzeitig Photonen mit unterschiedlichen Wellenlängen detektiert werden können. Es kann vorgesehen sein, dass vor den mehreren Detektionsmodulen Frequenz-Filter angeordnet sind, um eine Quantenschlüsselerzeugung mit mehreren Empfängern gleichzeitig zu ermöglichen, indem die Photonen anhand ihrer Wellenlänge auf die Detektionsmodule aufgeteilt werden. Dadurch kann für jedes Detektionsmodul eines Empfängers ein jeweiliger Partnerempfänger zugeordnet werden. Es kann vorgesehen sein, dass der Frequenz-Filter als dichroitischer Spiegel, oder als Gitter, oder als Filter ausgebildet ist.

Es kann vorgesehen sein, dass in Schritt iv) zur Quantenschlüsselerzeugung aus den detektierten Photonen in Schritt iii) ein Rohschlüssel bei beiden Empfängern erzeugt wird. Weiter kann vorgesehen sein, dass nach der Erzeugung des Rohschlüssels eine Sichtung (sifting) des Rohschlüssels durchgeführt wird. Zur Sichtung werden nach der Messung der Photonen Informationen zwischen den beiden Empfängern ausgetauscht. Dabei handelt es sich bei diesen Informationen beispielsweise um die Zeitstempel der gemessenen Photonen. Danach führt jeder Empfänger für sich den Sichtungsprozess an seinem eigenen Rohschlüssel durch. Es kann vorgesehen sein, dass nach der Sichtung noch zusätzlich weitere Schritte, wie eine Fehlerermittlung und/oder Fehlerbehebung und/oder eine Verstärkung der Privatsphäre (privacy amplification) durchgeführt werden. Durch die Sichtung und die eventuellen weiteren Schritte kann bei beiden Empfängern ein gemeinsamer Schlüssel durch Quantenschlüsselerzeugung erzeugt werden.

Es kann vorgesehen sein, dass eine Übertragungsrate von verschränkten Photonen zwischen zwei oder mehreren Empfängern von mindestens 1kHz, vorzugsweise mindestens 100kHz, höchst vorzugsweise mindestens 10MHz erfolgt.

Es kann vorgesehen sein, dass die Quantenschlüsselerzeugung in Schritt iv) für die Verbindungen einer Zeitspanne $t_k$ jeweils während und/oder nach der entsprechenden Zeitspanne $t_k$ erfolgt. Während bedeutet, dass in jeder Zeitspanne jeweils die Schritte i) bis iv) durchgeführt werden. Danach bedeutet, dass in jeder Zeitspanne die Schritte i) bis iii) durchgeführt werden, und der Schritt iv) nach der jeweiligen Zeitspanne erfolgt. Die Erzeugung des Quantenschlüssels aus dem Rohschlüssel kann auch während der jeweiligen Zeitspanne starten und erst in einer nächsten Zeitspanne abgeschlossen werden. Wesentlich ist, dass durch die Detektion der Photonen in Schritt iii) bereits ein Rohschlüssel für die Quantenschlüsselerzeugung erzeugt werden kann, welcher zur Erzeugung des gemeinsamen Schlüssels verwendet wird. Die Durchführung des Schritts iv) ermöglicht eine vollständige Quantenschlüsselerzeugung in der jeweiligen Zeitspanne, wobei während der Erzeugung weiterer Photonen schon ein Quantenschlüssel aus den bereits detektieren Photonen erzeugt werden kann.

Es kann vorgesehen sein, dass die Übertragung in Schritt ii) über einen Splitter und/oder Schalter im Quantenkanal erfolgt. Es kann vorgesehen sein, dass zwei oder mehrere Empfänger über einen Splitter und/oder einen Schalter über einen gemeinsamen Quantenkanal mit der Quelle verbunden sind. Wesentlich dabei ist, dass in einer derartigen Ausgestaltung diese zwei oder mehrere Empfänger, die über einen Splitter und/oder einen Schalter über einen gemeinsamen Quantenkanal mit der Quelle verbunden sind, nicht untereinander einen Quantenschlüssel erzeugen können. In diesem Fall ist unter einer Quantenschlüsselerzeugung zwischen allen Empfängern zu verstehen, dass jeder dieser zwei oder mehrere Empfänger, die über einen Splitter und/oder einen Schalter über einen gemeinsamen Quantenkanal mit der Quelle verbunden sind, mit allen anderen Empfängern Quantenschlüssel erzeugen können, aber nicht mit dem Empfänger, welcher ebenfalls über den Splitter und/oder Schalter Photonen empfängt. Vorteilhafterweise ergibt sich daraus ein einfacheres und kostengünstigeres Netzwerk, da zum Anschluss dieser zwei oder mehreren Empfänger an die Quelle nur ein einziger Quantenkanal notwendig ist. Ein Splitter kann beispielsweise als Strahlteiler ausgebildet sein, welcher die Photonen zufällig auf einen seiner Ausgangskanäle aufteilt. Ein Schalter kann beispielsweise als beweglicher Spiegel ausgebildet sein oder steckbare Verbindung, wodurch die Photonen je nach Position des Spiegels oder der gesteckten Verbindung zu einem der Ausgangskanäle gelenkt werden. Die Splitter und/oder Schalter können einen Zugangsknoten (access node oder service node), Relaisknoten (relay nodes) oder einen Benutzerknoten (user node) darstellen. Eine derartige Ausgestaltung ermöglicht eine kostengünstigere Anbindung mehrerer Empfänger miteinander. So können beispielsweise mehrere Benutzerknoten und ihre zugehörigen Zugangsknoten ein QKD-Zugangsnetz (QAN) bilden, das für die Abdeckung von Ballungsräumen geeignet ist. Und mehrere Relaisknoten können ein QKD-Backbone-Netz (QBN) bilden, um mehrere QANs für eine weiträumige Abdeckung zu verbinden.

Es kann vorgesehen sein, dass in jeder Zeitspanne $t_k$ für mindestens zwei Verbindungen $V_j$ die Schritte i) bis iii) mit dem Abgleich durchgeführt werden, vorzugsweise die Schritte i) bis iv). Darunter ist zu verstehen, dass in jeder Zeitspanne $t_k$ für zwei Verbindungen $V_j$ die Schritte i) bis iii), vorzugsweise die Schritte i) bis iv), mit dem Abgleich durchgeführt werden, oder für drei Verbindungen $V_j$ die Schritte i) bis iii), vorzugsweise die Schritte i) bis iv), mit dem Abgleich durchgeführt werden, oder für vier Verbindungen $V_j$ die Schritte i) bis iii), vorzugsweise die Schritte i) bis iv), mit dem Abgleich durchgeführt werden, und so weiter. Je mehr Verbindungen $V_j$ in jeder Zeitspanne $t_k$ abgeglichen werden, umso größer ist die Erzeugungsrate der Quantenschlüssel für alle Empfänger.

Es kann vorgesehen sein, dass in jeder Zeitspanne $t_k$ ein Empfänger maximal einmal in den Verbindungen $V_j$ der jeweiligen Zeitspanne $t_k$ enthalten ist. Damit kann in einfacher Weise sichergestellt werden, dass der Abgleich der Verbindungen $V_j$ dieser Zeitspanne $t_k$ unabhängig voneinander erfolgt.

Es kann vorgesehen sein, dass in jeder Zeitspanne $t_k$ ein Empfänger in mehreren der Verbindungen $V_j$ der jeweiligen Zeitspanne $t_k$ enthalten ist. Mit anderen Worten ausgedrückt kann vorgesehen sein, dass in jeder Zeitspanne $t_k$ jeweils einer der Empfänger in mehreren der Verbindungen $V_j$ der jeweiligen Zeitspanne $t_k$ enthalten ist. Wesentlich dabei ist, dass der Abgleich aller Verbindungen $V_j$ dieser Zeitspanne $t_k$ weiterhin unabhängig voneinander erfolgt. Damit kann aber ein Empfänger, welcher einen hohen Kommunikationsbedarf aufweist mit einer höheren Rate der Quantenschlüsselerzeugung mehrmals bedient werden.

Es kann vorgesehen sein, dass in jeder Zeitspanne $t_k$ jeweils einer der Empfänger in allen Verbindungen der jeweiligen Zeitspanne enthalten ist, und/oder dass in verschiedenen Zeitspannen $t_k$ jeweils ein anderer der Empfänger in allen Verbindungen der jeweiligen Zeitspanne enthalten ist, und/oder dass in einer Zeitspanne $t_{k+1}$ wenigstens eine Verbindung $V_j$ der Zeitspanne $t_k$ enthalten ist, wobei k eine natürliche Zahl ist, und/oder dass in jeder Zeitspanne $t_{k+1}$ wenigstens eine Verbindung $V_j$ der Zeitspanne $t_k$ enthalten ist, wobei $k$ eine natürliche Zahl ist. Dadurch können einzelne Verbindungen oder mehrere Verbindungen oder alle Verbindungen beispielsweise doppelt durchlaufen werden und somit zur Quantenschlüsselerzeugung doppelt bzw. mehrmals bedient werden.

Insbesondere kann vorgesehen sein, dass die Anzahl der Zeitspannen gleich oder größer der Anzahl der Empfänger ist.

Es kann vorgesehen sein, dass jede Zeitspanne $t_k$ mindestens 1 s, vorzugsweise mindestens 1 min, vorzugsweise mindestens 5 min oder mehr beträgt. Es kann vorgesehen sein, dass sich die Länge der Zeitspannen $t_k$ voneinander unterscheidet. Daraus ergibt sich vorteilhaft, dass für Verbindungen $V_j$ welche einen höheren oder niedrigeren Schlüsselbedarf haben die Zeitspannen $t_k$ an den jeweiligen Bedarf angepasst werden können.

In den folgenden Beispielen werden zum einfacheren Verständnis die Empfänger $E_1$, $E_2$ usw. als Empfänger A, B usw. bezeichnet.

Als ein nicht-exklusives erstes Beispiel wird hier ein Verfahren zur Quantenschlüsselerzeugung und ein System zur Quantenschlüsselerzeugung mit vier Empfängern (A, B, C, D) angeführt. In diesem System führen alle Empfänger untereinander eine Quantenschlüsselerzeugung durch.

Aufgrund der vier Empfänger (A, B, C, D) und der Kommunikationsmöglichkeit ergeben sich somit

$$s = \frac{i(i-1)}{2} = 6$$ Verbindungen $V_j$ mit AB, AC, AD, BC, BD und CD.

In diesem nicht-exklusiven ersten Beispiel werden die Schritte i) bis iii) dieser Verbindungen in q = 3 Zeitspannen eingeteilt, wobei jede Zeitspanne $t_k$ r = 2 Verbindungen $V_j$ aufweist mit:

$$t_1 = [AB, CD]$$

$$t_2 = [AC, BD]$$

$$t_3 = [AD, BC]$$

Dabei enthält beispielsweise die erste Zeitspanne $t_1$ die erste Verbindung $V_1 = AB$, d.h. eine Quantenschlüsselerzeugung zwischen dem ersten Empfänger A und dem zweiten Empfänger B, und die zweite Verbindung $V_2 = CD$, d.h. eine Quantenschlüsselerzeugung zwischen dem dritten Empfänger C und dem vierten Empfänger D. Die Zeitspannen $t_2$ und $t_3$ sind in gleicher Weise zu lesen.

Der zeitliche Effizienzfaktor beträgt $\frac{s}{q} = 2$, das heißt, dass durch das erfindungsgemäße Verfahren und das erfindungsgemäße System zwischen den vier Empfängern gemäß des nicht-exklusiven ersten Beispiels eine Quantenschlüsselerzeugung zwischen allen Empfängern doppelt so schnell möglich ist verglichen mit einer jeweils nacheinander für jede Verbindung durchgeführten Quantenschlüsselerzeugung zwischen vier Empfängern.

Dies ist möglich, indem in dem erfindungsgemäßen Verfahren und dem erfindungsgemäßen System gleichzeitig die Schritte i) bis iii), vorzugsweise i) bis iv), für zwei Verbindungen durchgeführt werden können, während gleichzeitig das Abgleichen dieser Verbindungen ohne gegenseitige Störung durchgeführt werden kann und somit zusätzlich auch eine hohe Übertragungsrate und Qualität gewährleistet werden kann.

Als ein nicht-exklusives zweites Beispiel wird hier ein Verfahren zur Quantenschlüsselerzeugung und ein System zur Quantenschlüsselerzeugung mit vier Empfängern (A, B, C, D) angeführt. In diesem System führen alle Empfänger untereinander eine Quantenschlüsselerzeugung durch.

Aufgrund der vier Empfänger (A, B, C, D) und der Kommunikationsmöglichkeit ergeben sich daraus

$$s = \frac{i(i-1)}{2} = 6$$ Verbindungen $V_j$ mit AB, AC, AD, BC, BD, und CD.

In diesem nicht-exklusiven zweiten Beispiel werden die Schritte i) bis iii), vorzugsweise die Schritte i) bis iv), dieser Verbindungen in $q = 4$ Zeitspannen entsprechend der Anzahl der Empfänger eingeteilt, wobei jede Zeitspanne $t_k$ r = 3 Verbindungen $V_j$ aufweist mit:

$$t_1 = [AB, AC, AD]$$

$$t_2 = [BA, BC, BD]$$

$$t_3 = [CA, CB, CD]$$

$$t_4 = [DA, DB, DC]$$

Im Unterschied zu dem zuvor dargestellten zweiten Beispiel, wird hier in jeder Zeitspanne $t_k$ eine Verbindung von jeweils einem Empfänger zu allen übrigen Empfängern bedient, wobei der jeweils eine Empfänger in der nächsten Zeitspanne $t_{k+1}$ gegen einen anderen Empfänger getauscht wird. Das bedeutet, dass nach dem Durchlaufen aller $q = 4$ Zeitspannen jede Verbindung zwischen zwei Empfängern zweimal zur Quantenschlüsselerzeugung durchlaufen wird, wie in der nachstehenden Tabelle verdeutlicht wird.

| AB | AC | AD | BC | BD | CD |
|----|----|----|----|----|----|
| 2  | 2  | 2  | 2  | 2  | 2  |

So können doppelt so viele Quantenschlüssel erzeugt werden, wie in dem zuvor dargestellten ersten Beispiel.

Nach dem Durchlaufen aller $q = 4$ Zeitspannen stehen nun 12 Keypools bzw. 12 Quantenschlüssel zur Verfügung, gegenüber den 6 Keypools bzw. 6 Quantenschlüsseln gemäß dem zuvor dargestellten ersten Beispiel.

Als ein nicht-exklusives drittes Beispiel wird hier ein Verfahren zur Quantenschlüsselerzeugung und ein System zur Quantenschlüsselerzeugung mit fünf Empfängern (A, B, C, D, E) angeführt. In diesem System führen alle Empfänger untereinander eine Quantenschlüsselerzeugung durch.

Aufgrund der fünf Empfänger (A, B, C, D, E) und der Kommunikationsmöglichkeit ergeben sich daraus

$$s = \frac{i(i-1)}{2} = 10$$ Verbindungen $V_j$ mit AB, AC, AD, AE, BC, BD, BE, CD, CE und DE.

In diesem nicht-exklusiven dritten Beispiel werden die Schritte i) bis iii), vorzugsweise die Schritte i) bis iv), dieser Verbindungen in $q = 5$ Zeitspannen eingeteilt, wobei jede Zeitspanne $t_k$ $r = 2$ Verbindungen $V_j$ aufweist mit:

$$t_1 = [AB, CD]$$

$$t_2 = [BC, DE]$$

$$t_3 = [AE, BD]$$

$$t_4 = [AC, BE]$$

$$t_5 = [AD, CE]$$

Der zeitliche Effizienzfaktor beträgt $\frac{s}{q} = 2$.

Zu beachten ist hier, dass auch andere Einteilungen der Verbindungen $V_j$ in die Zeitspannen möglich sind.
Weiter ist es auch möglich, die Verbindungen in mehr als fünf Zeitspannen einzuteilen, wobei dadurch eine oder mehrere Verbindungen $V_j$ in mehreren Zeitspannen enthalten sind. Dadurch verringert sich der zeitliche Effizienzfaktor, beispielsweise bei sechs Gruppen auf $\frac{s}{q} = 1.67$. Vorteilhaft ist aber, dass dafür beispielsweise für die eine oder mehreren Verbindungen $V_j$, welche öfter in den Zeitspannen enthalten sind, ein längerer Quantenschlüssel erzeugt werden kann, falls bei dieser einen oder den mehreren Verbindungen eine erhöhte Nachfrage besteht.
Das derart beschriebene nicht-exklusive dritte Beispiel zeigt eine sequenzielle Durchführung zur Quantenschlüsselerzeugung.
Als Abwandlung dazu können in einer nicht sequenziellen Durchführung beispielsweise folgende Zeitspannen möglich sein:

$$t_1 = [AB, CD]$$

$$t_2 = [BC, DE]$$

$$t_2 = [BC, DE]$$

$$t_3 = [AE, BD]$$

$$t_4 = [AC, BE]$$

$$t_5 = [AD, CE]$$

In dieser Abwandlung wird die zweite Zeitspanne $t_2$ ein zweites Mal durchgeführt. Dies ist vorteilhaft, wenn zwischen den Empfängern B und C und den Empfängern D und E ein hoher Bedarf an Quantenschlüsseln besteht.
In einer weiteren Abwandlung ist es ebenfalls möglich, zwischen zwei Zeitfenstern Verbindungen $V_j$ zu bedienen, welche noch nicht in einem Zeitfenster zusammengefasst waren, die aber trotzdem unabhängig voneinander abgeglichen werden können, wie beispielsweise im Folgenden gezeigt:

$$t_1 = [AB, CD]$$

$$t_2 = [BC, DE]$$

$$t_6 = [BC, AD]$$

$$t_3 = [AE, BD]$$

$$t_4 = [AC, BE]$$

$$t_5 = [AD, CE]$$

In dieser Abwandlung werden beispielhaft nach der zweiten Zeitspanne $t_2$ die Verbindungen BC und AD in einer Zeitspanne $t_6$ bedient. Dies ist vorteilhaft, wenn zwischen den Empfängern B und C und den Empfängern A und D ein hoher Bedarf an Quantenschlüsseln besteht.

Als ein weiteres nicht-exklusives viertes Beispiel wird hier ein Verfahren zur Quantenschlüsselerzeugung und ein System zur Quantenschlüsselerzeugung mit fünf Empfängern (A, B, C, D, E) angeführt. In diesem System führen alle Empfänger untereinander eine Quantenschlüsselerzeugung durch. Dieses vierte Beispiel ist die Erweiterung des zuvor beschriebenen zweiten Beispiels mit 4 Empfängern um einen Empfänger, also mit fünf Empfängern. In analoger Weise lässt sich dieses Verfahren gemäß dem zweiten oder vierten Beispiel auf mehrere Empfänger ausdehnen. Insbesondere auf 6 Empfänger, oder auf 7 Empfänger, oder auf 8 oder mehrere Empfänger.

Aufgrund der fünf Empfänger (A, B, C, D, E) und der Kommunikationsmöglichkeit ergeben sich daraus

$$s = \frac{i(i-1)}{2} = 10$$ Verbindungen $V_j$ mit AB, AC, AD, AE, BC, BD, BE, CD, CE und DE.

In diesem nicht-exklusiven vierten Beispiel werden die Schritte i) bis iii), vorzugsweise die Schritte i) bis iv), dieser Verbindungen in $q$ = 5 Zeitspannen entsprechend der Anzahl der Empfänger eingeteilt, wobei jede Zeitspanne $t_k$ r = 4 Verbindungen $V_j$ aufweist mit:

$$t_1 = [AB, AC, AD, AE]$$

$$t_2 = [BA, BC, BD, BE]$$

$$t_3 = [CA, CB, CD, CE]$$

$$t_4 = [DA, DB, DC, DE]$$

$$t_5 = [EA, EB, EC, ED]$$

Im Unterschied zu dem zuvor dargestellten dritten Beispiel, wird hier in jeder Zeitspanne $t_k$ eine Verbindung von jeweils einem Empfänger zu allen übrigen Empfängern bedient, wobei der jeweils eine Empfänger in der nächsten Zeitspanne $t_{k+1}$ gegen einen anderen Empfänger getauscht wird. Das bedeutet, dass nach dem Durchlaufen aller $q$ = 5 Zeitspannen jede Verbindung zwischen zwei Empfängern zweimal zur Quantenschlüsselerzeugung durchlaufen wird, wie in der nachstehenden Tabelle verdeutlicht wird.

| AB | AC | AD | AE | BC | BD | BE | CD | CE | DE |
|----|----|----|----|----|----|----|----|----|----|
| 2  | 2  | 2  | 2  | 2  | 2  | 2  | 2  | 2  | 2  |

So können in jeder Zeitspanne doppelt so viele Quantenschlüssel erzeugt werden, wie in dem zuvor dargestellten dritten Beispiel.

Nach dem Durchlaufen aller $q$ = 5 Zeitspannen stehen nun 20 Keypools bzw. 20 Quantenschlüssel zur Verfügung, gegenüber den 10 Keypools bzw. 10 Quantenschlüsseln gemäß dem zuvor dargestellten dritten Beispiel.

Als ein nicht-exklusives fünftes Beispiel wird hier ein Verfahren zur Quantenschlüsselerzeugung und ein System zur Quantenschlüsselerzeugung mit sechs Empfängern (A, B, C, D, E, F) angeführt. In diesem System führen alle Empfänger untereinander eine Quantenschlüsselerzeugung durch.

Aufgrund der sechs Empfänger (A, B, C, D, E, F) und der Kommunikationsmöglichkeit ergeben sich daraus $s = \frac{i(i-1)}{2} = 15$ Verbindungen mit AB, AC, AD, AE, AF, BC, BD, BE, BF, CD, CE, CF, DE, DF und EF.

In diesem nicht-exklusiven fünften Beispiel werden die Schritte i) bis iii), vorzugsweise die Schritte i) bis iv), dieser Verbindungen in $q = 5$ Zeitspannen eingeteilt, wobei jede Zeitspanne $t_k$ $r = 3$ Verbindungen $V_j$ aufweist mit beispielsweise folgender Einteilung:

$$t_1 = [AB, CD, EF]$$

$$t_2 = [AC, BE, DF]$$

$$t_3 = [AD, BF, CE]$$

$$t_4 = [AE, BD, CF]$$

$$t_5 = [AF, BC, DE]$$

Beispielhaft wird hier eine weitere Einteilung angegeben:

$$t_1 = [AB, CE, DF]$$

$$t_2 = [AC, BD, EF]$$

$$t_3 = [AD, BE, CF]$$

$$t_4 = [AE, BF, CD]$$

$$t_5 = [AF, BC, DE]$$

In beiden Fällen beträgt der zeitliche Effizienzfaktor $\frac{s}{q} = 3$.

Zu beachten ist hier, dass auch andere Einteilungen der Verbindungen $V_j$ in die Zeitspannen möglich sind, und dass es auch möglich ist, die Verbindungen in mehr als fünf Zeitspannen einzuteilen, wobei dadurch eine oder mehrere Verbindungen in mehreren Zeitspannen enthalten sind.

Als ein nicht-exklusives sechstes Beispiel wird hier ein Verfahren zur Quantenschlüsselerzeugung und ein System zur Quantenschlüsselerzeugung mit sieben Empfängern (A, B, C, D, E, F, G) angeführt. In diesem System führen alle Empfänger untereinander eine Quantenschlüsselerzeugung durch.

Aufgrund der sieben Empfänger (A, B, C, D, E, F, G) und der Kommunikationsmöglichkeit ergeben sich daraus $s = \frac{i(i-1)}{2} = 21$ Verbindungen mit AB, AC, AD, AE, AF, AG, BC, BD, BE, BF, BG, CD, CE, CF, CG, DE, DF, DG, EF, EG und FG.

In diesem nicht-exklusiven sechsten Beispiel werden die Schritte i) bis iii), vorzugsweise die Schritte i) bis iv), dieser Verbindungen in $q = 7$ Zeitspannen eingeteilt, wobei jede Zeitspanne $t_k$ $r = 3$ Verbindungen $V_j$ aufweist mit beispielsweise folgender Einteilung:

$$t_1 = [AB, CD, EF]$$

$$t_2 = [AC, BD, EG]$$

$$t_3 = [AD, BC, FG]$$

$$t_4 = [AE, BF, CG]$$

$$t_5 = [AF, BE, DG]$$

$$t_6 = [AG, CE, DF]$$

$$t_7 = [BG, CF, DE]$$

Beispielhaft wird hier eine weitere Einteilung angegeben:

$$t_1 = [AB, CG, EF]$$

$$t_2 = [AC, BE, DG]$$

$$t_3 = [AD, FG, CE]$$

$$t_4 = [AE, BC, DF]$$

$$t_5 = [AF, BD, EG]$$

$$t_6 = [AG, BF, CD]$$

$$t_7 = [DE, CF, BG]$$

In beiden Fällen beträgt der zeitliche Effizienzfaktor $\frac{s}{q} = 3$ .

Zu beachten ist hier, dass auch andere Einteilungen der Verbindungen $V_j$ in die Zeitspannen möglich sind, und dass es auch möglich ist, die Verbindungen in mehr als sieben Zeitspannen einzuteilen, wobei dadurch eine oder mehrere Verbindungen in mehreren Zeitspannen enthalten sind.

Als ein nicht-exklusives siebtes Beispiel wird hier ein Verfahren zur Quantenschlüsselerzeugung und ein System zur Quantenschlüsselerzeugung mit acht Empfängern (A, B, C, D, E, F, G, H) angeführt. In diesem System führen alle Empfänger untereinander eine Quantenschlüsselerzeugung durch.

Aufgrund der acht Empfänger (A, B, C, D, E, F, G, H) und der Kommunikationsmöglichkeit ergeben sich daraus $s = \frac{i(i-1)}{2} = 28$ Verbindungen mit AB, AC, AD, AE, AF, AG, AH, BC, BD, BE, BF, BG, BH, CD, CE, CF, CG, CH, DE, DF, DG, DH, EF, EG, EH, FG, FH und GH.

In diesem nicht-exklusiven siebten Beispiel werden die Schritte i) bis iii), vorzugsweise die Schritte i) bis iv), dieser Verbindungen in $q$ = 7 Zeitspannen eingeteilt, wobei jede Zeitspanne $t_k$ $r$ = 4 Verbindungen $V_j$ aufweist mit beispielsweise folgender Einteilung:

$$t_1 = [AB, CD, EF, GH]$$

$$t_2 = [AC, BD, EG, FH]$$

$$t_3 = [AD, BC, EH, FG]$$

$$t_4 = [AE, BF, CG, DH]$$

$$t_5 = [AF, BE, CH, DG]$$

$$t_6 = [AG, BH, CE, DF]$$

$$t_7 = [AH, BG, CF, DE]$$

In diesen Fall beträgt der zeitliche Effizienzfaktor $\frac{s}{q} = 4$ .

Zu beachten ist hier, dass auch andere Einteilungen der Verbindungen $V_j$ in die Zeitspannen möglich sind, und dass es auch möglich ist, die Verbindungen in mehr als acht Zeitspannen einzuteilen, wobei dadurch eine oder mehrere Verbindungen in mehreren Zeitspannen enthalten sind.

Als ein nicht-exklusives achtes Beispiel wird hier ein Verfahren und ein System zur Quantenschlüsselerzeugung mit vier Empfängern ($A_1$, $A_2$, $B_1$, $B_2$) angeführt. In diesem Verfahren und System können alle $A_i$ Empfänger mit allen $B_i$ Empfängern eine Quantenschlüsselerzeugung durchführen. Eine Quantenschlüsselerzeugung zwischen den beiden Empfängern $A_1$ und $A_2$ sowie zwischen den beiden Empfängern $B_1$ und $B_2$ ist aber nicht möglich.

Aufgrund der vier Empfänger ($A_1$, $A_2$, $B_1$, $B_2$) und der Kommunikationsmöglichkeit ergeben sich daraus $s = 4$ Verbindungen durch die Anzahl der Empfänger $A_i$ multipliziert mit der Anzahl der Empfänger $B_i$ mit $A_1B_1$, $A_1B_2$, $A_2B_1$ und $A_2B_2$.

In diesem nicht-exklusiven achten Beispiel werden die Schritte i) bis iii), vorzugsweise die Schritte i) bis iv), dieser Verbindungen in $q = 2$ Zeitspannen eingeteilt, wobei jede Zeitspanne $t_k$ $r = 2$ Verbindungen $V_j$ aufweist mit beispielsweise folgender Einteilung:

$$t_1 = [A_1B_1, A_2B_1]$$

$$t_2 = [A_1B_2, A_2B_2]$$

Beispielhaft werden hier zwei weitere Einteilung angegeben:

$$t_1 = [A_1B_1, A_1B_2]$$

$$t_2 = [A_2B_1, A_2B_2]$$

$$t_1 = [A_1B_1, A_2B_2]$$

$$t_2 = [A_1B_2, A_2B_1]$$

In allen Fällen beträgt der zeitliche Effizienzfaktor $\frac{s}{q} = 2$ .

Als ein nicht-exklusives neuntes Beispiel wird hier ein Verfahren und ein System zur Quantenschlüsselerzeugung mit fünf Empfängern ($A_1$, $A_2$, $A_3$, $B_1$, $B_2$) angeführt. In diesem Verfahren und System können alle $A_i$ Empfänger mit allen $B_i$ Empfängern eine Quantenschlüsselerzeugung durchführen. Eine Quantenschlüsselerzeugung zwischen den Empfängern $A_1$, $A_2$ und $A_3$ sowie zwischen den beiden Empfängern $B_1$ und $B_2$ ist nicht möglich.

Aufgrund der fünf Empfänger ($A_1$, $A_2$, $A_3$, $B_1$, $B_2$) und der Kommunikationsmöglichkeit ergeben sich $s = 6$ Verbindungen durch die Anzahl der Empfänger $A_i$ multipliziert mit der Anzahl der Empfänger $B_i$ mit $A_1B_1$, $A_1B_2$, $A_2B_1$, $A_2B_2$, $A_3B_1$ und $A_3B_2$.

In diesem nicht-exklusiven neunten Beispiel werden die Schritte i) bis iii), vorzugsweise die Schritte i) bis iv), dieser Verbindungen in $q$ = 2 Zeitspannen eingeteilt, wobei jede Zeitspanne $t_k$ $r$ = 3 Verbindungen $V_j$ aufweist mit beispielsweise folgender Einteilung:

$$G_1 = [A_1 B_1, A_2 B_1, A_3 B_1]$$

$$G_2 = [A_1 B_2, A_2 B_2, A_3 B_2]$$

Der zeitliche Effizienzfaktor beträgt $\frac{s}{q} = 3$ .

Zu beachten ist hier, dass in diesem Fall der Abgleich der Verschränkungseigenschaft alleine durch die Empfänger mit der größeren Anzahl durchgeführt werden kann, d.h. hier durch die $A_i$ Empfänger. Dies bedeutet, dass bei den $B_i$ Empfängern nicht zwingend eine Vorrichtung zum Abgleich der Verschränkungseigenschaft ausgebildet sein muss.

Weitere Ausführungen der Erfindung sind in den Figuren dargestellt und nachfolgend beschrieben. In den Figuren ist beispielhaft eine mögliche Ausgestaltung der Erfindung gezeigt. Diese Ausgestaltung dient der Erläuterung einer möglichen Umsetzung der Erfindung und soll nicht eingrenzend verstanden werden. Dabei zeigen:

Fig. 1:     eine schematische Darstellung eines erfindungsgemäßen Systems mit vier Empfängern;
Fig. 2:     eine schematische Darstellung des Systems aus Fig. 1 mit den möglichen Verbindungen $V_j$;
Fig. 3:     eine schematische Darstellung eines erfindungsgemäßen Systems mit sechs Empfängern;
Fig. 4:     eine schematische Darstellung eines erfindungsgemäßen Systems mit vier Empfängern und zwei Splittern in den Quantenkanälen;
Fig. 5 bis 7:     eine schematische Darstellung des Systems aus Fig. 4 mit den möglichen Verbindungen $V_j$;
Fig. 8:     eine schematische Darstellung eines erfindungsgemäßen Systems mit sechs Empfängern, zwei Splittern und zwei Schaltern in den Quantenkanälen;
Fig. 9:     eine schematische Darstellung eines erfindungsgemäßen Systems mit sechs Empfängern, drei Splittern und einem Schalter in den Quantenkanälen;
Fig. 10:     eine schematische Darstellung des Systems aus Fig. 1 mit einer Steuervorrichtung;
Fig. 11:     eine schematische Darstellung des Systems aus Fig. 4 mit einer Steuervorrichtung.

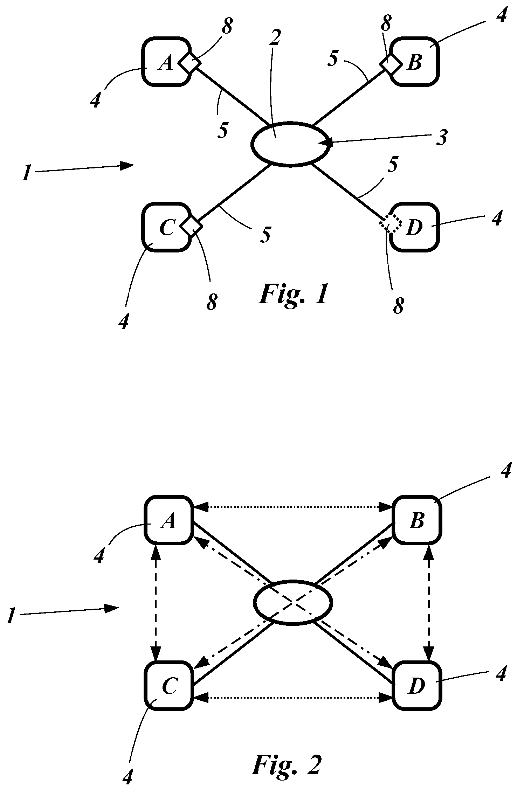

Fig. 1 zeigt eine schematische Darstellung eines ersten Ausführungsbeispiels eines erfindungsgemäßen Systems 1 zur Quantenschlüsselerzeugung mit verschränkten Photonenpaaren zwischen vier Empfängern A, B, C und D.

Das Systems 1 zur Quantenschlüsselerzeugung aus Fig. 1 weist eine Quelle 2 auf, welche zur Erzeugung von verschränkten Photonenpaaren in einer Verschränkungseigenschaft ausgebildet ist. In diesem Ausführungsbeispiel ist ein Frequenz-Multiplexer 3 in der Quelle 2 angeordnet, welcher dazu ausgebildet ist, die Signal-Photonen und Idler-Photonen der verschränkten Photonenpaare anhand ihrer Wellenlänge auf die Quantenkanäle 5 der mehreren Empfänger 4 aufzuteilen.

Im Ausführungsbeispiel der Fig. 1 weisen die Empfänger 4 A, B und C jeweils eine Abgleicheinrichtung 8 auf. Optional weist auch der Empfänger 4 D eine Abgleicheinrichtung 8 auf, wie strichliert dargestellt. Die Abgleicheinrichtungen 8 gleichen die Bezugssysteme in Bezug auf die Verschränkungseigenschaft der verschiedenen Empfänger 4 aufeinander an.

Fig. 2 zeigt das erfindungsgemäße System 1 zur Quantenschlüsselerzeugung aus Fig. 1, wobei in Fig. 2 zur besseren Übersicht die Abgleicheinrichtungen 8 nicht dargestellt sind. In Fig. 2 sind die möglichen Verbindungen $V_j$ zwischen den Empfängern 4 zur Quantenschlüsselerzeugung und deren Einteilung in die mehreren Zeitspannen $t_k$ dargestellt.

In einer ersten Zeitspanne $t_1$ wird in diesem Ausführungsbeispiel die Quantenschlüsselerzeugung zwischen den Empfängern A und C und den Empfängern B und D durchgeführt, wie in Fig. 2 durch die gestrichelten Pfeile angedeutet. Dazu werden in der Quelle 2 verschränkte Photonenpaare erzeugt und zu allen Empfängern übertragen, wobei die Verbindungen über die Quantenkanäle 5 zwischen den Empfängern A und C und zwischen den Empfängern B und D in dieser ersten Zeitspanne $t_1$ abgeglichen werden. Der Abgleich kann in dieser ersten Zeitspanne $t_1$ beispielsweise durch eine Abgleicheinrichtung 8 beim Empfänger A und beim Empfänger B erfolgen.

Wesentlich ist, dass durch die Abgleicheinrichtung 8 beim Empfänger A die Bezugssysteme in Bezug auf die Verschränkungseigenschaft der Empfänger 4 A und C aneinander angepasst werden. Dies bedeutet, dass mögliche Änderungen der Verschränkungseigenschaften durch die Übertragung der Photonen in dieser Verbindung, beispielsweise eine Polarisationsdrehung in den Quantenkanälen 5, durch die Abgleicheinrichtung 8 beim Empfänger A ausgeglichen werden.

In einer zweiten Zeitspanne $t_2$ wird in diesem Ausführungsbeispiel die Quantenschlüsselerzeugung zwischen den Empfängern A und B und den Empfängern C und D durchgeführt, wie in Fig. 2 durch die gepunkteten Pfeile angedeutet. Der Abgleich der Verbindungen kann in dieser zweiten Zeitspanne $t_2$ beispielsweise durch jeweils eine Abgleicheinrichtung 8 beim Empfänger A und beim Empfänger C erfolgen.

In einer dritten Zeitspanne $t_3$ wird in diesem Ausführungsbeispiel die Quantenschlüsselerzeugung zwischen den Empfängern A und D und den Empfängern C und B durchgeführt, wie in Fig. 2 durch die strich-punkt Pfeile angedeutet. Der Abgleich der Verbindungen kann in dieser zweiten Zeitspanne $t_3$ beispielsweise durch jeweils eine Abgleicheinrichtung 8 beim Empfänger A und beim Empfänger C erfolgen.

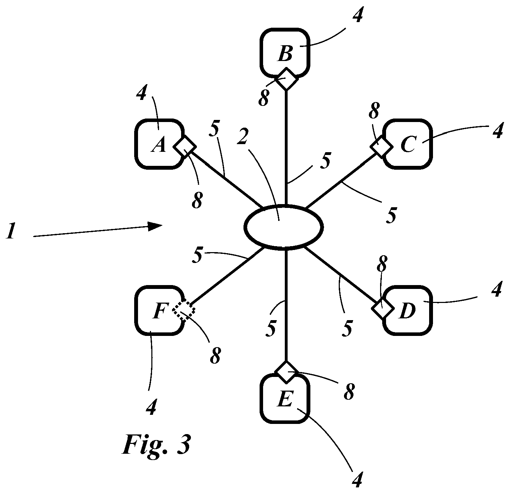

Fig. 3 zeigt eine schematische Darstellung eines zweiten Ausführungsbeispiels eines erfindungsgemäßen Systems 1 zur Quantenschlüsselerzeugung mit verschränkten Photonenpaaren zwischen sechs Empfängern A, B, C, D, E und F.

Das System 1 zur Quantenschlüsselerzeugung weist eine Quelle 2 auf, welche zur Erzeugung von verschränkten Photonenpaaren in einer Verschränkungseigenschaft ausgebildet ist. In diesem Ausführungsbeispiel ist ein Frequenz-Multiplexer 3 in der Quelle 2 angeordnet, welcher dazu ausgebildet ist, die Signal-Photonen und Idler-Photonen der verschränkten Photonenpaare anhand ihrer Wellenlänge auf die Quantenkanäle 5 der mehreren Empfänger 4 aufzuteilen.

Im Ausführungsbeispiel der Fig. 3 weisen die Empfänger 4 A, B, C, D und E jeweils eine Abgleicheinrichtung 8 auf. Optional weist auch der Empfänger 4 F eine Abgleicheinrichtung 8 auf, wie strichliert dargestellt. Die Abgleicheinrichtungen 8 gleichen die Bezugssysteme in Bezug auf die Verschränkungseigenschaft der verschiedenen Empfänger 4 aufeinander an.

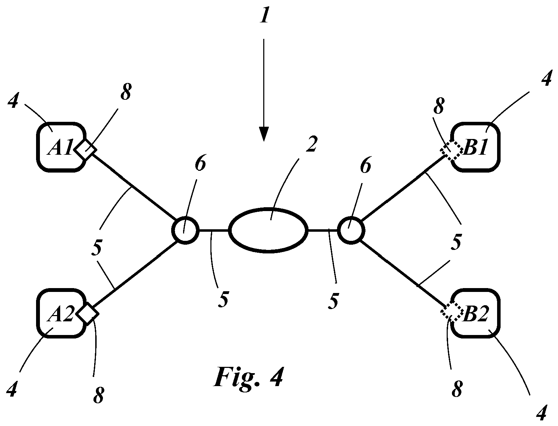

Fig. 4 zeigt eine schematische Darstellung eines dritten Ausführungsbeispiels eines erfindungsgemäßen Systems 1 zur Quantenschlüsselerzeugung mit verschränkten Photonenpaaren zwischen vier Empfängern $A_1$, $A_2$, $B_1$ und $B_2$. Die Empfänger $A_1$ und $A_2$ (bzw. $B_1$ und $B_2$) sind jeweils über einen eigenen Quantenkanal 5 mit einen Splitter 6 und über diesen mit einem gemeinsamen Quantenkanal 5 mit der Quelle 2 verbunden. Wesentlich dabei ist, dass in diesem Ausführungsbeispiel die zwei Empfänger 4 $A_1$ und $A_2$ (bzw. $B_1$ und $B_2$), die über einen Splitter 6 über einen gemeinsamen Quantenkanal 5 mit der Quelle 2 verbunden sind, nicht untereinander einen Quantenschlüssel erzeugen können. In diesem Fall ist unter einer Quantenschlüsselerzeugung zwischen allen Empfängern 4 zu verstehen, dass jeder dieser zwei Empfänger $A_1$ und $A_2$ (bzw. $B_1$ und $B_2$), die über einen Splitter 6 über einen gemeinsamen Quantenkanal 5 mit der Quelle 2 verbunden sind, mit allen anderen Empfängern 4 $B_1$ und $B_2$ (bzw. $A_1$ und $A_2$) Quantenschlüssel erzeugen können, aber nicht untereinander.

Im Ausführungsbeispiel der Fig. 4 weisen die Empfänger 4 $A_1$ und $A_2$ jeweils eine Abgleicheinrichtung 8 auf. Optional weisen nur oder auch die Empfänger 4 $B_1$ und $B_2$ eine Abgleicheinrichtung 8 auf, wie strichliert dargestellt. Die Abgleicheinrichtungen 8 gleichen die Bezugssysteme in Bezug auf die Verschränkungseigenschaft der verschiedenen Empfänger 4 aufeinander an.

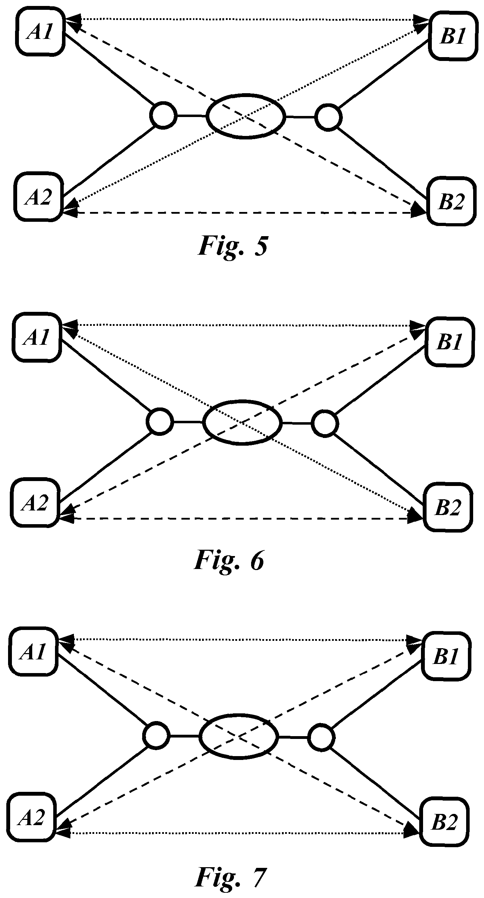

In den Fig. 5, 6 und 7 ist das erfindungsgemäße System 1 zur Quantenschlüsselerzeugung aus Fig. 4 dargestellt, wobei in den Fig. 5, 6 und 7 zur besseren Übersicht die Abgleicheinrichtungen 8 nicht dargestellt sind. Die Fig. 5, 6 und 7 zeigen die möglichen Verbindungen zwischen den Empfängern 4 zur Quantenschlüsselerzeugung und deren Einteilung in die mehreren Zeitspannen $t_k$.

In Fig. 5 ist eine erste mögliche Einteilung der Verbindungen dargestellt, indem in einer ersten Zeitspanne $t_1$ eine Quantenschlüsselerzeugung zwischen den Empfängern $A_1$ und $B_2$ und den Empfängern $A_2$ und $B_2$ (gestrichelte Pfeile) mit Abgleich der Verbindung erfolgt. In einer zweiten Zeitspanne $t_2$ erfolgt eine Quantenschlüsselerzeugung zwischen den Empfängern $A_1$ und $B_1$ und den Empfängern $A_2$ und $B_1$ (gepunktete Pfeile) mit Abgleich der Verbindung.

In Fig. 6 ist eine zweite mögliche Einteilung der Verbindungen dargestellt, indem in einer ersten Zeitspanne $t_1$ eine Quantenschlüsselerzeugung zwischen den Empfängern $A_2$ und $B_1$ und den Empfängern $A_2$ und $B_2$ (gestrichelte Pfeile) mit Abgleich der Verbindung erfolgt. In einer zweiten Zeitspanne $t_2$ erfolgt eine Quantenschlüsselerzeugung zwischen den Empfängern $A_1$ und $B_1$ und den Empfängern $A_1$ und $B_2$ (gepunktete Pfeile) mit Abgleich der Verbindung. Der Unterschied zu den Verbindungen der Fig. 5 liegt darin, dass für Fig. 5 die Abgleicheinrichtungen 8 bei den Empfängern $A_1$ und $A_2$ ausreichen, und für Fig. 6 die Abgleicheinrichtungen 8 bei den Empfängern $B_1$ und $B_2$ angeordnet sein können.

In Fig. 7 ist eine dritte mögliche Einteilung der Verbindungen dargestellt, indem in einer ersten Zeitspanne $t_1$ eine Quantenschlüsselerzeugung zwischen den Empfängern $A_1$ und $B_2$ und den Empfängern $A_2$ und $B_1$ (gestrichelte Pfeile) mit Abgleich der Verbindung erfolgt. In einer zweiten Zeitspanne $t_2$ erfolgt eine Quantenschlüsselerzeugung zwischen den Empfängern $A_1$ und $B_1$ und den Empfängern $A_2$ und $B_2$ (gepunktete Pfeile) mit Abgleich der Verbindung.

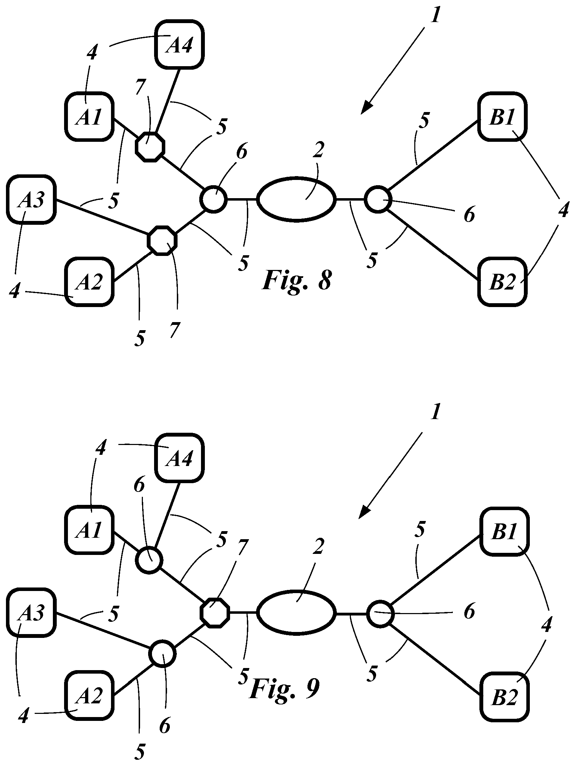

Die Fig. 8 und 9 zeigen zwei weitere Ausführungsbeispiele des erfindungsgemäßen Systems 1 zur Quantenschlüsselerzeugung mit sechs Empfängern 4.

In diesen Ausführungsbeispielen ist die Quelle 2 über mehrere Quantenkanäle 5, Splitter 6 und Schalter 7 mit den sechs Empfängern 4 verbunden. Dabei unterscheiden sich die Figuren 8 und 9 nur darin, dass in Fig. 8 die Empfänger A1, A2, A3 und A4 zuerst über einen Splitter 6 mit der Quelle 2 verbunden sind und danach eine weitere Aufteilung durch zwei Schalter 7 erfolgt und in Fig. 9 die Empfänger A1, A2, A3 und A4 zuerst über einen Schalter 7 mit der Quelle 2 verbunden sind und danach eine weitere Aufteilung durch zwei Splitter 6 erfolgt. Die Quantenschlüsselerzeugung erfolgt in beiden Ausführungsbeispielen analog zum Ausführungsbeispiel der Fig. 4 bis 7.

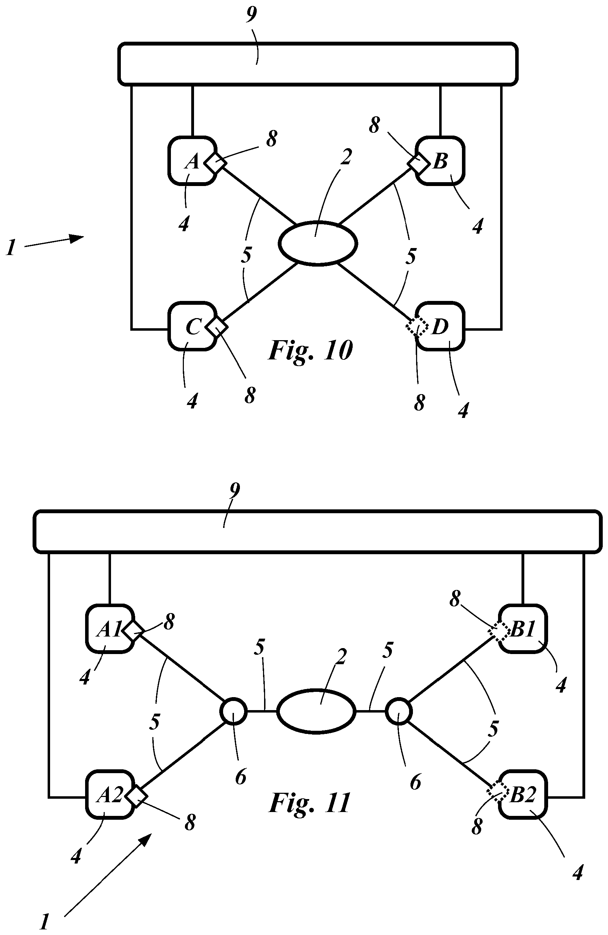

Fig. 10 zeigt das System 1 zur Quantenschlüsselerzeugung aus dem Ausführungsbeispiel der Fig. 1, wobei in Fig. 10 zusätzlich die Steuervorrichtung 9 (Key-Management-System) dargestellt ist. In diesem Ausführungsbeispiel ist die Steuervorrichtung 9 über Leitungen und den jeweiligen Empfänger 4 mit den Abgleicheinrichtungen 8 verbunden.

Fig. 11 zeigt das System 1 zur Quantenschlüsselerzeugung aus dem Ausführungsbeispiel der Fig. 4 wobei in Fig. 11 zusätzlich die Steuervorrichtung 9 dargestellt ist. In diesem Ausführungsbeispiel ist die Steuervorrichtung 9 (Key-Management-System) über Leitungen und den jeweiligen Empfänger 4 mit den Abgleicheinrichtungen 8 verbunden.

Bezugszeichenliste

1    System zur Quantenschlüsselerzeugung
2    Quelle
3    Frequenz-Multiplexer
4    Empfänger
5    Quantenkanal
6    Splitter
7    Schalter
8    Abgleicheinrichtung
9    Steuervorrichtung

**Patentansprüche**

1. Verfahren zur Quantenschlüsselerzeugung mit verschränkten Photonenpaaren zwischen mindestens vier Empfängern (4), wobei jeweils zwei Empfänger (4) eines verschränkten Photonenpaares eine Verbindung $V_j$ zur Quantenschlüsselerzeugung ausbilden, mit folgenden Schritten:

   i) Erzeugung verschränkter Photonenpaare in einer Quelle (2), wobei jedes Photonenpaar ein Signal-Photon und ein Idler-Photon aufweist, welche in einer Verschränkungseigenschaft miteinander verschränkt sind;
   ii) Aufteilen der Signal-Photonen und der Idler-Photonen anhand ihrer Wellenlänge auf Quantenkanäle der mehreren Empfänger (4) und Übertragen der Signal-Photonen und der Idler-Photonen über die Verbindungen $V_j$ bildenden Quantenkanäle von der Quelle (2) zu den Empfängern (4);
   iii) Detektion der Signal-Photonen und der Idler-Photonen bei den jeweiligen Empfängern (4);
   iv) Quantenschlüsselerzeugung zwischen den Empfängern (4) der verschränkten Photonenpaare;
   wobei zur Quantenschlüsselerzeugung zwischen allen Empfängern (4) mehrere Zeitspannen gebildet werden, **gekennzeichnet dadurch, dass** in jeder Zeitspanne jeweils die Schritte i) bis iii) durchgeführt werden, und dass in jeder Zeitspanne jeweils vor und/oder während Schritt ii) nur zwischen zwei oder mehreren Verbindungen $V_j$ ein Abgleich der Verschränkungseigenschaft durchgeführt wird, welche unabhängig voneinander abgeglichen werden können, um in diesen zwei oder mehreren Verbindungen $V_j$ eine Quantenschlüsselerzeugung zu ermöglichen, und dass sich die Zeitspannen derart unterscheiden, dass jeweils mindestens eine Verbindung $V_j$ durch eine andere Verbindung $V_j$ ausgetauscht ist, in welcher eine Quantenschlüsselerzeugung noch nicht möglich war, um durch die mehreren Zeitspannen eine Quantenschlüsselerzeugung zwischen allen Empfängern (4) durchzuführen, und/oder wobei in der letzten Zeitspanne eine Verbindung $V_j$, oder mehrere der Verbindungen $V_j$, oder alle Verbindungen $V_j$, wiederholt werden, die bereits in vorherigen Zeitspannen gebildet wurden, um eine erneute Quantenschlüsselerzeugung durchzuführen.

2. Verfahren nach Anspruch 1,
   **dadurch gekennzeichnet,**
   **dass** der Abgleich je Verbindung $V_j$ vor und/oder während Schritt ii) nur durch eine Abgleicheinrichtung (8) erfolgt, angeordnet bei einem der beiden Empfänger (4) oder in einem der beiden Quantenkanälen.

3. Verfahren nach Anspruch 2,
   **dadurch gekennzeichnet,**
   **dass** der Abgleich vor und/oder in Schritt ii) durch eine Steuervorrichtung (9) durchgeführt, überwacht und/oder geregelt wird, welche mit allen Abgleicheinrichtungen (8) verbunden ist.

**4.** Verfahren nach einem der vorangehenden Ansprüche,
**dadurch gekennzeichnet,**
**dass** in Schritt iii) ein oder mehrere Empfänger (4) gleichzeitig mehrere Signal-Photonen und/oder Idler-Photonen mit unterschiedlichen Wellenlängen detektiert.

**5.** Verfahren nach einem der vorangehenden Ansprüche,
**dadurch gekennzeichnet,**
**dass** die Quantenschlüsselerzeugung in Schritt iv) für die Verbindungen einer Zeitspanne $t_k$ jeweils während und/oder nach der entsprechenden Zeitspanne $t_k$ erfolgt.

**6.** Verfahren nach einem der vorangehenden Ansprüche,
**dadurch gekennzeichnet,**
**dass** die Übertragung in Schritt ii) über einen Splitter (6) und/oder Schalter (7) im Quantenkanal (5) erfolgt.

**7.** Verfahren nach einem der vorangehenden Ansprüche,
**dadurch gekennzeichnet,**
**dass** die mehreren Zeitspannen mehrmals wiederholt werden, und/oder dass in jeder Zeitspanne $t_k$ ein Empfänger (4) maximal einmal in den Verbindungen $V_j$ der jeweiligen Zeitspanne $t_k$ enthalten ist.

**8.** Verfahren nach einem der vorangehenden Ansprüche,
**dadurch gekennzeichnet,**
**dass** in jeder Zeitspanne $t_k$ ein Empfänger (4) in mehreren der Verbindungen $V_j$ der jeweiligen Zeitspanne $t_k$ enthalten ist, und/oder dass in jeder Zeitspanne $t_k$ jeweils einer der Empfänger (4) in allen Verbindungen der jeweiligen Zeitspanne enthalten ist, und/oder dass in verschiedenen Zeitspannen $t_k$ jeweils ein anderer der Empfänger (4) in allen Verbindungen der jeweiligen Zeitspanne enthalten ist, und/oder dass in einer Zeitspanne $t_{k+1}$ wenigstens eine Verbindung $V_j$ der Zeitspanne $t_k$ enthalten ist, wobei k eine natürliche Zahl ist, und/oder dass in jeder Zeitspanne $t_{k+1}$ wenigstens eine Verbindung $V_j$ der Zeitspanne $t_k$ enthalten ist, wobei k eine natürliche Zahl ist.

**9.** Verfahren nach einem der vorangehenden Ansprüche,
**dadurch gekennzeichnet,**
**dass** die Anzahl der Zeitspannen gleich oder größer der Anzahl der Empfänger (4) ist.

**10.** Verfahren nach einem der vorangehenden Ansprüche,
**dadurch gekennzeichnet,**
**dass** in Schritt i) verschränkte Photonenpaare in jeder Zeitspanne $t_k$ für alle möglichen Verbindungen $V_j$ erzeugt werden, oder dass in Schritt i) verschränkte Photonenpaare in jeder Zeitspanne $t_k$ nur für die darin auch abgeglichenen Verbindungen $V_j$ erzeugt werden.

**11.** Verfahren nach einem der vorangehenden Ansprüche,
**dadurch gekennzeichnet,**
**dass** in Schritt i) verschränkte Photonenpaare mit Wellenlängen erzeugt werden, welche zufällig über ein breites Spektrum verteilt sind, oder gezielt verschränkte Photonenpaare mit bestimmten Wellenlängen erzeugt werden.

**12.** Verfahren nach einem der vorangehenden Ansprüche,
**dadurch gekennzeichnet,**
**dass** die verschränkten Photonenpaare in der Zeit, und/oder der Polarisation, und/oder im Bahndrehimpuls, und/oder im Spin-Drehimpuls verschränkt sind.

**13.** Verfahren nach Anspruch 12,
**dadurch gekennzeichnet,**
**dass** zum Abgleich von in der Polarisation verschränkten Photonenpaaren eine Polarisationsdrehung in der Verbindung $V_j$ ausgeglichen wird, und/oder dass zum Abgleich von in der Zeit verschränkten Photonenpaaren eine Zeitspanne in der Verbindung $V_j$ ausgeglichen wird, und/oder dass zum Abgleich von im Bahndrehimpuls, und/oder im Spin-Drehimpuls verschränkten Photonenpaaren eine Drehimpulsänderung in der Verbindung $V_j$ ausgeglichen wird.

**14.** Verfahren nach einem der vorangehenden Ansprüche,
**dadurch gekennzeichnet,**

**dass** in Schritt i) die verschränkten Photonenpaare durch einen nicht-linearen Prozess erzeugt werden.

15. System (1) zur Quantenschlüsselerzeugung mit verschränkten Photonenpaaren zwischen mindestens vier Empfängern (4),

wobei das System (1) eine Quelle (2), einen Frequenz-Multiplexer (3), mehrere Quantenkanäle und die mehreren Empfänger (4) aufweist, wobei die mehreren Empfänger (4) über jeweils einen Quantenkanal (5) mit der Quelle (2) verbunden sind,

wobei die Quelle (2) zur Erzeugung verschränkter Photonenpaare mit jeweils einem Signal-Photon und einem Idler-Photon ausgebildet ist, welche in einer Verschränkungseigenschaft miteinander verschränkt sind, wobei die Quantenkanäle jeweils zweier Empfänger (4) eines verschränkten Photonenpaares eine Verbindung $V_j$ zur Quantenschlüsselerzeugung ausbilden,

wobei in oder nach der Quelle (2) der Frequenz-Multiplexer (3) angeordnet ist, welcher dazu ausgebildet ist, die Signal-Photonen und Idler-Photonen anhand ihrer Wellenlänge auf die Quantenkanäle der mehreren Empfänger (4) aufzuteilen,

wobei jeder Empfänger (4) ein Detektionsmodul aufweist, welches ein Messmodul und mindestens einen Detektor aufweist, welche ausgebildet sind, die Verschränkungseigenschaft der Photonen zur Quantenschlüsselerzeugung zu detektieren,

wobei das System (1) Abgleicheinrichtungen (8) aufweist, welche in den Empfängern (4) oder in den Quantenkanälen zu den Empfängern (4) angeordnet sind und ausgebildet sind, einen Abgleich der Verschränkungseigenschaft der verschränkten Photonenpaare bezüglich zweier Empfänger (4) durchzuführen, wobei das System (1) zusätzlich eine Steuervorrichtung (9) aufweist und die Steuervorrichtung (9) mit jeder Abgleicheinrichtung (8) verbunden ist, und dass die Steuervorrichtung (9) ausgebildet ist zur Quantenschlüsselerzeugung zwischen allen Empfängern (4) die Abgleicheinrichtungen (8) in mehreren Zeitspannen anzusteuern,

wobei das System (1) zur Durchführung des Verfahrens zur Quantenschlüsselerzeugung nach einem der Ansprüche 1 bis 14 gemäß den Schritten i) bis iv) ausgebildet ist,

**dadurch gekennzeichnet, dass**

die Steuervorrichtung (9) ausgebildet ist, in jeder Zeitspanne nur die Abgleicheinrichtungen (8) zwischen zwei oder mehreren Verbindungen $V_j$ anzusteuern, welche unabhängig voneinander abgeglichen werden können, um in diesen zwei oder mehreren Verbindungen $V_j$ eine Quantenschlüsselerzeugung zu ermöglichen,

wobei die Steuervorrichtung (9) ausgebildet ist, in jeder Zeitspanne die Ansteuerung der Abgleicheinrichtung (8) jeweils mindestens einer Verbindung $V_j$ durch die Ansteuerung der Abgleicheinrichtung (8) einer anderen Verbindung $V_j$ zu ersetzen, in welcher eine Quantenschlüsselerzeugung noch nicht möglich war, um durch die mehreren Zeitspannen eine Quantenschlüsselerzeugung zwischen allen Empfängern (4) durchzuführen, und/oder wobei in der letzten Zeitspanne eine Verbindung $V_j$ , oder mehrere der Verbindungen $V_j$ , oder alle Verbindungen $V_j$ , wiederholt werden, die bereits in vorherigen Zeitspannen gebildet wurden, um eine erneute Quantenschlüsselerzeugung durchzuführen.

16. System (1) nach Anspruch 15,
**dadurch gekennzeichnet,**

**dass** jeder Empfänger (4) oder jeder Quantenkanal (5) eines Empfängers (4) eine Abgleicheinrichtung (8) aufweist, oder
**dass** das System (1) nur *i* - 1 Abgleicheinrichtungen (8) aufweist, wobei *i* die Anzahl der Empfänger ist.

**Claims**

1. Method for quantum key generation with entangled photon pairs between at least four receivers (4), wherein in each case two receivers (4) of an entangled photon pair form a connection $V_j$ for quantum key generation, with the following steps:

i) generating entangled photon pairs in a source (2), each photon pair comprising a signal photon and an idler photon which are entangled with each other in an entanglement property;
ii) distributing the signal photons and the idler photons on the basis of their wavelength to quantum channels of the multiple receivers (4) and transmitting the signal photons and the idler photons via the quantum channels forming connections $V_j$ from the source to the receivers (4);
iii) detection of the signal photons and idler photons at the respective receivers (4);

iv) quantum key generation between the receivers (4) of the entangled photon pairs;
wherein for quantum key generation several time spans are formed between all receivers (4),
**characterized in that**
the steps i) to iii) are carried out in each time span, and
that, in each time span before and/or during step ii), an entanglement property alignment is performed only between two or more connections $V_j$ which can be aligned independently of one another in order to enable quantum key generation in these two or more connections $V_j$ , and
that the time spans differ in such a way that in each case at least one connection $V_j$ is replaced by another connection $V_j$ in which quantum key generation was not yet possible in order to carry out quantum key generation between all receivers (4) by means of the several time spans, and/or that in the last time span one connection $V_j$ , or several of the connections $V_j$ , or all connections $V_j$ , which have already been formed in previous time spans are repeated in order to carry out quantum key generation again.

2. Method according to claim 1,
**characterized in that**
the alignment per connection $V_j$ before and/or during step ii) is performed by only one alignment device (8) arranged at one of the two receivers (4) or in one of the two quantum channels.

3. Method according to claim 2,
**characterized in that**
the alignment is carried out, monitored and/or controlled before and/or in step ii) by a control device (9) which is connected to all alignment devices (8).

4. The method according to any one of the preceding claims,
**characterized in that**
in step iii) one or more receivers (4) simultaneously detect multiple signal photons and/or idler photons with different wavelengths.

5. The method according to any one of the preceding claims,
**characterized in that**
the quantum key generation in step iv) for the connections of a time span $t_k$ takes place during and/or after the corresponding time span $t_k$.

6. The method according to any one of the preceding claims,
**characterized in that**
the transmission in step ii) takes place via a splitter (6) and/or switch (7) in the quantum channel (5).

7. The method according to any one of the preceding claims,
**characterized in that**
the several time spans are repeated several times, and/or that in each time span $t_k$ a receiver (4) is included at most once in the connections $V_j$ of the respective time span $t_k$.

8. The method according to any one of the preceding claims,
**characterized in that**
in each time span $t_k$ a receiver (4) is contained in several of the connections $V_j$ of the respective time span $t_k$, and/or that in each time span $t_k$ in each case one of the receivers (4) is contained in all connections of the respective time span, and/or that in different time spans $t_k$ in each case another one of the receivers (4) is contained in all connections of the respective time span, and/or in that in a time span $t_{k+1}$ at least one connection $V_j$ of the time span $t_k$ is contained, k being a natural number, and/or **in that** in each time span $t_{k+1}$ at least one connection $V_j$ of the time span $t_k$ is contained, k being a natural number.

9. The method according to any one of the preceding claims,
**characterized in that**
the number of time spans is equal to or greater than the number of receivers (4).

10. The method according to any one of the preceding claims,
**characterized in that**
in step i) entangled photon pairs are generated in each time span $t_k$ for all possible connections $V_j$ , or that in step i) entangled photon pairs are generated in each time span $t_k$ only for the connections $V_j$ also aligned therein.

11. The method according to any one of the preceding claims,
 **characterized in that**
 in step i) entangled photon pairs with wavelengths are generated which are randomly distributed over a broad spectrum, or entangled photon pairs with specific wavelengths are generated in a targeted manner.

12. The method according to any one of the preceding claims,
 **characterized in that**
 the entangled photon pairs are entangled in time, and/or polarization, and/or orbital angular momentum, and/or spin angular momentum.

13. Method according to claim 12,
 **characterized in that**

 a polarization rotation in the connection $V_j$ is compensated for the alignment of photon pairs that are entangled in the polarization, and/or that a time span in the connection $V_j$ is compensated for the alignment of photon pairs that are entangled in time, and/or
 that a change in angular momentum in the connection $V_j$ is compensated for the alignment of photon pairs entangled in orbital angular momentum and/or spin angular momentum.

14. The method according to any one of the preceding claims,
 **characterized in that**
 in step i) the entangled photon pairs are generated by a non-linear process.

15. System (1) for quantum key generation with entangled photon pairs between at least four receivers (4),

 wherein the system (1) comprises a source (2), a frequency multiplexer (3), a plurality of quantum channels and the multiple receivers (4), each of the multiple receivers (4) being connected to the source (2) via a quantum channel (5),
 wherein the source (2) is designed to generate entangled photon pairs each comprising a signal photon and an idler photon which are entangled with each other in an entanglement property,
 wherein the quantum channels of two receivers (4) of an entangled photon pair respectively form a connection $V_j$ for quantum key generation,
 wherein the frequency multiplexer (3) is arranged in or after the source (2), wherein the frequency multiplexer (3) is designed to distribute the signal photons and idler photons to the quantum channels of the multiple receivers (4) on the basis of their wavelength,
 wherein each receiver (4) has a detection module which has a measuring module and at least one detector which are designed to detect the entanglement property of the photons for quantum key generation,
 wherein the system (1) has alignment devices (8) which are arranged in the receivers (4) or in the quantum channels to the receivers (4) and are designed to perform an alignment of the entanglement property of the entangled photon pairs with respect to two receivers (4), wherein
 the system (1) additionally has a control device (9) and the control device (9) is connected to each alignment device (8), and
 the control device (9) is designed to control the alignment devices (8) in several time spans for quantum key generation between all receivers (4), wherein the system (1) is designed to carry out the method for quantum key generation according to one of claims 1 to 14 in accordance with steps i) to iv),
 **characterized in that**
 the control device (9) is designed to control in each time span only the alignment devices (8) between two or more connections $V_j$ which can be aligned independently of each other in order to enable quantum key generation in these two or more connections $V_j$,
 wherein the control device (9) is designed to replace in each time span the control of the alignment device (8) of at least one connection $V_j$ by controlling the alignment device (8) of another connection $V_j$ in which a quantum key generation was not yet possible, in order to carry out a quantum key generation between all receivers (4) by means of the several time spans, and/or wherein in the last time span one connection $V_j$, or several of the connections $V_j$, or all connections $V_j$, which have already been formed in previous time spans are repeated in order to carry out a quantum key generation again.

**16.** System (1) according to claim 15,
**characterized in that**

each receiver (4) or each quantum channel (5) of a receiver (4) has an alignment device (8), or
that the system (1) has only *i* - 1 alignment devices (8), wherein *i* is the number of receivers.

**Revendications**

**1.** Procédé de génération de clé quantique avec des paires de photons intriqués entre au moins quatre récepteurs (4), deux récepteurs (4) d'une paire de photons intriqués formant respectivement une connexion $V_j$ pour la génération de clé quantique, comprenant les étapes suivantes:

i) générer des paires de photons intriqués dans une source (2), chaque paire de photons comprenant un photon de signal et un photon Idler qui sont intriqués l'un avec l'autre dans une propriété d'intrication;
ii) répartir les photons de signal et les photons Idler sur la base de leur longueur d'onde sur des canaux quantiques de la pluralité de récepteurs (4) et transmettre les photons de signal et les photons Idler par l'intermédiaire des canaux quantiques formant des connexions $V_j$ de la source (2) aux récepteurs (4);
iii) détection des photons de signal et des photons Idler au niveau des récepteurs respectifs (4);
iv) génération de clé quantique entre les récepteurs (4) des paires de photons intriqués;
plusieurs intervalles de temps étant formés entre tous les récepteurs (4) pour la génération de la clé quantique,
**caractérisé en ce que**
dans chaque intervalle de temps, les étapes i) à iii) sont respectivement exécutées, et
dans chaque intervalle de temps, respectivement avant et/ou pendant l'étape ii), un alignement de la propriété d'intrication n'est effectué qu'entre deux ou plusieurs connexions $V_j$, qui peuvent être alignées indépendamment les unes des autres, afin de permettre une génération de clé quantique dans ces deux ou plusieurs connexions $V_j$, et
les intervalles de temps diffèrent de telle sorte qu'à chaque fois au moins une connexion $V_j$ est remplacée par une autre connexion $V_j$, dans laquelle une génération de clé quantique n'était pas encore possible, afin d'effectuer une génération de clé quantique entre tous les récepteurs (4) par les plusieurs intervalles de temps, et/ou dans lequel, dans le dernier intervalle de temps, une connexion $V_j$, ou plusieurs des connexions $V_j$, ou toutes les connexions $V_j$, qui ont déjà été formées dans des intervalles de temps précédentes, sont répétées pour effectuer une nouvelle génération de clé quantique.

**2.** Procédé selon la revendication 1,
**caractérisé en ce que**
l'alignement par connexion $V_j$ avant et/ou pendant l'étape ii) est effectué uniquement par un dispositif d'alignement (8), disposé auprès de l'un des deux récepteurs (4) ou dans l'un des deux canaux quantiques.

**3.** Procédé selon la revendication 2,
**caractérisé en ce que**
l'alignement est effectué, surveillé et/ou régulé avant et/ou à l'étape ii) par un dispositif de commande (9) qui est relié à tous les dispositifs d'alignement (8).

**4.** Procédé selon l'une des revendications précédentes,
**caractérisé en ce que**
à l'étape iii), un ou plusieurs récepteurs (4) détectent simultanément plusieurs photons de signal et/ou photons Idler de différentes longueurs d'onde.

**5.** Procédé selon l'une des revendications précédentes,
**caractérisé en ce que**
la génération de clé quantique à l'étape iv) pour les connexions d'un intervalle de temps $t_k$ a lieu respectivement pendant et/ou après l'intervalle de temps $t_k$ correspondant.

**6.** Procédé selon l'une des revendications précédentes,
**caractérisé en ce que**
la transmission à l'étape ii) s'effectue par l'intermédiaire d'un répartiteur (6) et/ou d'un commutateur (7) dans le canal quantique (5).

**7.** Procédé selon l'une des revendications précédentes,
**caractérisé en ce que**
les multiples intervalles de temps sont répétés plusieurs fois, et/ou **en ce que** dans chaque intervalle de temps $t_k$, un récepteur (4) est contenu au maximum une fois dans les connexions $V_j$ de l'intervalle de temps $t_k$ respectif.

**8.** Procédé selon l'une des revendications précédentes,
**caractérisé en ce que**
dans chaque intervalle de temps $t_k$, un récepteur (4) est contenu dans plusieurs des connexions $V_j$ de l'intervalle de temps $t_k$ respectif, et/ou **en ce que**, dans chaque intervalle de temps $t_k$, un des récepteurs (4) est contenu dans toutes les connexions de l'intervalle de temps respectif, et/ou **en ce que**, dans différents intervalles de temps $t_k$, un autre des récepteurs (4) est contenu dans toutes les connexions de l'intervalle de temps respectif, et/ou que dans un intervalle de temps $t_{k+1}$ est contenue au moins une connexion $V_j$ de l'intervalle de temps $t_k$, k étant un nombre naturel, et/ou que dans chaque intervalle de temps $t_{k+1}$ est contenue au moins une connexion $V_j$ de l'intervalle de temps $t_k$, k étant un nombre naturel.

**9.** Procédé selon l'une des revendications précédentes,
**caractérisé en ce que**
le nombre des intervalles de temps est égal ou supérieur au nombre des récepteurs (4).

**10.** Procédé selon l'une des revendications précédentes,
**caractérisé en ce que**
dans l'étape i), des paires de photons intriqués sont générées dans chaque intervalle de temps $t_k$ pour toutes les connexions possibles $V_j$, ou que dans l'étape i), des paires de photons intriqués sont générées dans chaque intervalle de temps $t_k$ uniquement pour les connexions $V_j$ qui y sont également alignées.

**11.** Procédé selon l'une des revendications précédentes,
**caractérisé en ce que**
dans l'étape i), on produit des paires de photons intriqués avec des longueurs d'onde qui sont réparties de manière aléatoire sur un large spectre, ou on produit de manière ciblée des paires de photons intriqués avec des longueurs d'onde déterminées.

**12.** Procédé selon l'une des revendications précédentes,
**caractérisé en ce que**
les paires de photons intriqués sont intriquées en temps, et/ou en polarisation, et/ou en moment cinétique orbital, et/ou en moment cinétique de spin.

**13.** Procédé selon la revendication 12,
**caractérisé en ce que**

pour l'alignement de paires de photons intriqués dans la polarisation, une rotation de polarisation est compensée dans la connexion $V_j$, et/ou pour l'alignement de paires de photons intriqués dans le temps, un intervalle de temps est compensé dans la connexion $V_j$, et/ou
pour l'alignement de paires de photons intriqués dans le moment cinétique orbital, et/ou dans le moment cinétique de spin, une modification du moment cinétique est compensée dans la connexion $V_j$.

**14.** Procédé selon l'une des revendications précédentes,
**caractérisé en ce que**
dans l'étape i), les paires de photons intriqués sont générées par un processus non linéaire.

**15.** Système (1) de génération de clés quantiques utilisant des paires de photons intriqués entre au moins quatre récepteurs (4),

dans lequel le système (1) comprend une source (2), un multiplexeur de fréquence (3), une pluralité de canaux quantiques et la pluralité de récepteurs (4), la pluralité de récepteurs (4) étant connectée à la source (2) par l'intermédiaire d'un canal quantique (5) respectif,
la source (2) étant conçue pour générer des paires de photons intriqués comprenant chacune un photon de signal et un photon Idler, qui sont intriqués entre eux dans une propriété d'intrication,
dans lequel les canaux quantiques de respectivement deux récepteurs (4) d'une paire de photons intriqués

forment une connexion $V_j$ pour la génération de clé quantique,

le multiplexeur de fréquence (3) étant disposé dans ou après la source (2), lequel est conçu pour répartir les photons de signal et les photons Idler à l'aide de leur longueur d'onde sur les canaux quantiques des plusieurs récepteurs (4),

dans lequel chaque récepteur (4) comprend un module de détection qui comprend un module de mesure et au moins un détecteur qui sont conçus pour détecter la propriété d'intrication des photons pour la génération de clé quantique,

dans lequel le système (1) comprend des dispositifs d'alignement (8) qui sont disposés dans les récepteurs (4) ou dans les canaux quantiques vers les récepteurs (4) et qui sont conçus pour effectuer un alignement de la propriété d'intrication des paires de photons intriqués par rapport à deux récepteurs (4), dans lequel

le système (1) comprend en outre un dispositif de commande (9) et le dispositif de commande (9) est relié à chaque dispositif d'alignement (8), et que le dispositif de commande (9) est conçu pour commander les dispositifs d'alignement (8) pendant plusieurs intervalles de temps pour générer une clé quantique entre tous les récepteurs (4), le système (1) étant conçu pour mettre en oeuvre le procédé de génération de clé quantique selon l'une des revendications 1 à 14 conformément aux étapes i) à iv),

**caractérisé en ce que**

le dispositif de commande (9) est conçu pour commander, à chaque intervalle de temps, uniquement les dispositifs d'alignement (8) entre deux ou plusieurs connexions $V_j$ qui peuvent être alignées indépendamment les unes des autres, afin de permettre une génération de clé quantique dans ces deux ou plusieurs connexions $V_j$,

le dispositif de commande (9) étant conçu pour remplacer, dans chaque intervalle de temps, la commande du dispositif d'alignement (8) d'au moins une connexion $V_j$ par la commande du dispositif d'alignement (8) d'une autre connexion $V_j$ dans laquelle une génération de clé quantique n'était pas encore possible, afin d'effectuer une génération de clé quantique entre tous les récepteurs (4) à travers les multiples intervalles de temps, et/ou dans lequel, dans le dernier intervalle de temps, une connexion $V_j$ ou plusieurs des connexions $V_j$, ou toutes les connexions $V_j$ qui ont déjà été établies dans des intervalles de temps précédents sont répétées afin d'effectuer une nouvelle génération de clé quantique.

16. Système (1) selon la revendication 15,
   **caractérisé en ce que**

   chaque récepteur (4) ou chaque canal quantique (5) d'un récepteur (4) comporte un dispositif d'alignement (8), ou le système (1) ne comporte que $i$ - 1 dispositifs d'alignement (8), i étant le nombre de récepteurs.

*Fig. 1*

*Fig. 2*

**Fig. 3**

*Fig. 4*

**Fig. 5**

**Fig. 6**

**Fig. 7**

*Fig. 8*

*Fig. 9*

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **FITZKE ERIK et al.** Scalable Network for Simultaneous Pairwise Quantum Key Distribution via Entanglement-Based Time-Bin Coding. *PRX QUANTUM*, May 2022, vol. 3 (2), ISSN 2691-3399, 1, https://arxiv.org/pdf/2110.13795